# EUROPEAN PATENT APPLICATION

(11) **EP 2 871 216 A1**
(43) Date of publication of application: **13.05.2015**
(21) Application number: 13813625.4
(22) Date of filing: 28.06.2013
(51) Int. Cl.: C08L 101/02, C08F 8/08, C08F 8/32, C08F 10/02, C08K 3/08, C08K 5/07, C09K 3/00, C09K 11/06, G01K 11/20

(54) **POLYMER PARTICLES AND USE THEREOF**

(30) Priority: 06.07.2012 JP 2012152704
(71) Applicant: Mitsui Chemicals, Inc., Tokyo 105-7117 (JP)
(72) Inventor: NAKAYAMA Norio, Singapore 117406 (SG); MAKIO Haruyuki, Singapore 117406 (SG); TAKAHASHI Katsuyuki, Singapore 117406 (SG)
(74) Representative: Raynor, Stuart Andrew
(86) International application number: PCT/JP2013/067791
(87) International publication number: WO 2014/007154

(57) **Abstract**

The present invention provides polymer particles comprising the following components (a) and (b) and having an average particle diameter of 50% by volume of equal to or more than 1 nm and equal to or less than 1000 nm:
(a) an amphiphilic polymer; and
(b) a compound exhibiting a change in fluorescence characteristics or light absorption characteristics in response to a change in a specific environmental factor.

## Description

### TECHNICAL FIELD

The present invention relates to polymer particles, and an aqueous dispersion, a mixed composition, or an organic/inorganic composite thereof; and a sensor, a component for detecting a temperature, an oxygen concentration, or an ion concentration, a component for a photochromic lens, and a component for a chromic window, including the same. More specifically, the present invention relates to a fluorescent dye, polymer particles for immobilizing a chromic material and a method for immobilizing the polymer particles, an optical fiber type temperature detecting element, a temperature sensitive paint, a temperature sensitive film, a probe for measuring an intracellular temperature (a fluorescent probe for bio-imaging), various types of sensors (for pressure, oxygen, metals, pH, or the like), a chromic film, a chromic coating agent, or a chromic window.

### BACKGROUND ART

Recently, various fluorescent materials (fluorescent dyes, fluorescent protein, or the like) that exhibit a change in fluorescent characteristics (fluorescent spectra and the like) in response to a change in a specific environmental factor have been developed and have been investigated for their applications in various fields. A technique for measuring the temperature of a microscopic region in a micro-size through molecular size scale by employing the temperature sensitivity of a fluorescent material with high accuracy has been investigated (Patent Document 1).

A fluorescent type optical fiber thermometer is used to measure a temperature in response to a change in a fluorescence intensity emitted from a fluorescent material due to a change in the temperature by using an optical fiber having a temperature-sensitive fluorescent material placed at the tip, and its applications in various fields such as semiconductors, food, or medical fields can be expected. Further, in Fluorescent Microthermographic Imaging (FMI) for measuring a temperature using a Thermal Sensitive Paint (TSP) or a film having the temperature sensitive paint coated thereon, irradiation of a subject with excitation light makes a dye emit light, the light-emission intensity is correlated with temperature, and the intensity distribution is measured by means of a CCD camera to determine the surface temperature range of a microscopic region. Applications in a semiconductor field, an aviation field, a marine field, an automobile field, a medical field, or the like are expected (Patent Document 2).

Similarly, chromic materials (photochromic materials, thermochromic materials, or the like) that exhibit a change in light absorption characteristics (absorption spectra or the like) in response to a change in a specific environmental factor have been developed, and are applied in spectacle lenses, light modulating materials, display materials, ink materials, optical recording materials, optical switches, sensor materials, or the like (Patent Documents 3 and 4).

### RELATED DOCUMENT

### PATENT DOCUMENT

[Patent Document 1] Japanese Laid-open Patent Publication No. 1997-178575
[Patent Document 2] Japanese Laid-open Patent Publication No. 2001-4460
[Patent Document 3] Japanese Translation of PCT International Application Publication No. 1999-511765
[Patent Document 4] Japanese Translation of PCT International Application Publication No. 2003-502693

### SUMMARY OF THE INVENTION

### PROBLEM TO BE SOLVED BY THE INVENTION

However, a temperature detection unit in a measurement tool utilizing fluorescent characteristics is generally composed of a temperature-sensitive fluorescent material responsible for light emission and a polymer that is a binder. For its immobilization, a mixed composition dissolved in a solvent is directly coated on a tip of fibers, a film surface, or a subject. The solvent in the temperature-sensitive paint coated is volatilized immediately, and only the polymer and the fluorescent material remain to form a thin film. At this time, the location-dependency of the volatile state is affected, depending on the solvent, and thus, portions where only much fluorescent material aggregates are generated. Thus, a thin film having non-uniform dispersion characteristics of the fluorescent material may be formed in some cases. This phenomenon affects the measurement accuracy by causing imbalance in light emission intensity for the same temperature. In particular, in the measurement at a microscopic region, the effect is remarkably shown. Further, detachment of the fluorescent materials or the like during use is a concern in the case where adhesion of a binder to a subject is not sufficient. Furthermore, recently, with the development of various bio-imaging techniques, probes for measuring a temperature in cells or probes for measuring various metals (bio-imaging fluorescent probes) have been investigated. However, among these probes, there are some probes that cannot maintain stability in an aqueous environment and are prevented from being developed as a bio-imaging fluorescent probe.

Thus, temperature measurement techniques and bio-imaging using fluorescent materials have been studied extensively, but materials satisfying sufficient performance, repeat resistance, and stability in an aqueous environment have not still been found.

In addition, a chromic material utilizing light absorption characteristics is generally composed of a chromic material and a resin that is a binder. The chromic dye is cured after being mixed with an oligomer. Alternatively it is mixed into a polymer solution dissolved in a solvent, directly coated onto a film surface or a subject, and only the polymer and the fluorescent material remain after volatilization of the solvent, thereby forming a thin film. The absorption characteristics of the chromic materials generally change due to a reversible change in the chemical structure depending on a change in the environment such as in light and heat. At this time, a sufficient reversible change may not occur due to a significant reduction in the change in the chemical structure due to an effect from the polymer that is a binder nearby.

As described above, a practical use in lens materials, light modulating materials, and display materials, using chromic materials, has been initiated, but sufficient performance has still not been obtained at present.

It is an object of the present invention to provide a sensor that can detect a change in environment such as temperature with high accuracy, is excellent in repeated use, and can be used stably even in an aqueous environment; polymer particles to be used to obtain such a sensor; and polymer particles to be used to obtain a chromic material that can respond to a change in environment such as light and heat with high accuracy and is excellent in repeated use.

### SOLUTION TO PROBLEM

That is, the present invention includes the following inventions.
(1) Polymer particles comprising the following components (a) and (b) and having an average particle diameter of 50% by volume of equal to or more than 1 nm and equal to or less than 1000 nm:
   (a) an amphiphilic polymer; and
   (b) a compound exhibiting a change in fluorescence characteristics or light absorption characteristics in response to a change in a specific environmental factor.
(2) Polymer particles comprising the following components (a) and (b) and having an average particle diameter of 50% by volume of equal to or more than 1 nm and equal to or less than 1000 nm:
   (a) an amphiphilic polymer; and
   (b) a compound exhibiting a change in fluorescence characteristics in response to a change in a specific environmental factor.
(3) The polymer particles as described in (1) or (2), in which (a) is a polymer particle represented by the following general formula (1) and is a terminally branched copolymer having a number average molecular weight of equal to or less than 2.5 × 10⁴, 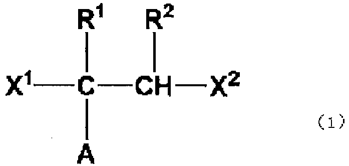 wherein, in the formula (1), A represents a polyolefin chain; R¹ and R² each represent a hydrogen atom or an alkyl group having 1 to 18 carbon atoms, and at least one of R¹ and R² is a hydrogen atom; and X¹ and X² are the same as or different from each other and each represent a group containing a linear or branched polyalkylene glycol group.
(4) The polymer particles as described in (3), in which in the terminally branched copolymer represented by the general formula (1), X¹ and X² are the same as or different from each other, and are each a group represented by either of the general formulae (2) and (4),

   -E-X³ (2)

   wherein, in the formula (2), E represents an oxygen atom or a sulfur atom; and X³ represents a polyalkylene glycol group or a group represented by the general formula (3),

   -R³-(G)ₘ (3)

   wherein, in the formula (3), R³ represents an (m+1)-valent hydrocarbon group; Gs are the same as or different from each other and each represent a group represented by -OX⁴ or -NX⁵X⁶ (X⁴ to X⁶ each represent a polyalkylene glycol group); and m is the bonding number for R³ to group G, and represents an integer of 1 to 10, 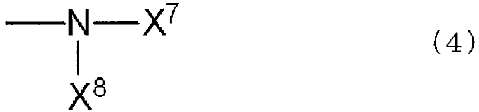 wherein, in the formula (4), X⁷ and X⁸ are the same as or different from each other and each represent a polyalkylene glycol group or a group represented by the general formula (3).
(5) The polymer particles as described in (4), in which the terminally branched copolymer is represented by the following general formula (1a) or (1b), 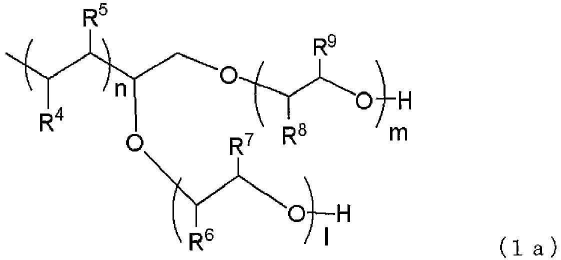 wherein, in the formula (1a), R⁴ and R⁵ each represent a hydrogen atom or an alkyl group having 1 to 18 carbon atoms, and at least one of R⁴ and R⁵ is a hydrogen atom; R⁶ and R⁷ each represent a hydrogen atom or a methyl group, and at least one of R⁶ and R⁷ is a hydrogen atom; R⁸ and R⁹ each represent a hydrogen atom or a methyl group, and at least one of R⁸ and R⁹ is a hydrogen atom; 1 + m represents an integer of equal to or more than 2 and equal to or less than 450; and n represents an integer of equal to or more than 20 and equal to or less than 300, 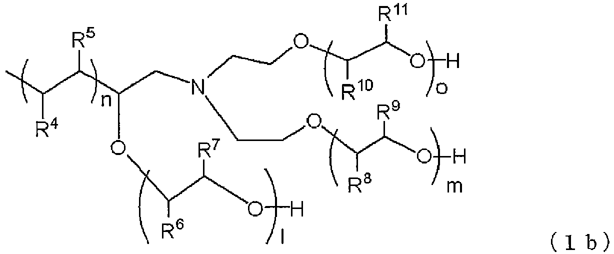 wherein, in the formula (1b), R⁴ and R⁵ each represent a hydrogen atom or an alkyl group having 1 to 18 carbon atoms, and at least one of R⁴ and R⁵ is a hydrogen atom; R⁶ and R⁷ each represent a hydrogen atom or a methyl group, and at least one of R⁶ and R⁷ is a hydrogen atom; R⁸ and R⁹ each represent a hydrogen atom or a methyl group, and at least one of R⁸ and R⁹ is a hydrogen atom; R¹⁰ and R¹¹ each represent a hydrogen atom or a methyl group, and at least one of R¹⁰ and R¹¹ is hydrogen atom; 1 + m + o represents an integer of equal to or more than 3 and equal to or less than 450; and n represents an integer of equal to or more than 20 and equal to or less than 300.
(6) The polymer particles as described in any one of (1) to (5), in which the average particle diameter of 50% by volume is equal to or more than 1 nm and equal to or less than 30 nm.
(7) The polymer particles as described in any one of (1) to (6), in which (b) is a temperature-sensitive fluorescent dye.
(8) The polymer particles as described in (7), further comprising
   a non-temperature-sensitive fluorescent dye as a reference for the temperature-sensitive fluorescent dye.
(9) The polymer particles as described in (7) or (8), in which the temperature-sensitive fluorescent dye is selected from a complex compound of a rare earth element selected from europium (Eu), lanthanum (La), samarium (Sm), gadolinium (Gd), terbium (Tb), dysprosium (Dy), thulium (Tm), ytterbium (Yb), and lutetium (Lu) with β-diketone chelating compounds, or a complex compound of iridium (Ir) with aromatic compounds.
(10) The polymer particles as described in (9), in which the temperature-sensitive fluorescent dye is tris(thenoyltrifluoroacetonate)europium (III) (Eu (III)(TTA)₃) or a derivative thereof.
(11) The polymer particles as described in any one of (1) to (8), in which
   (b) is fluorescent protein.
(12) The polymer particles as described in any one of (1) to (6), in which (b) is an oxygen-sensitive fluorescent dye or a pH-sensitive fluorescent dye.
(13) The polymer particles as described in (12), in which the oxygen-sensitive fluorescent dye is tris(2-phenylpyridine)iridium(III) (Ir(III)(ppy)₃) or a derivative thereof, and the pH-sensitive fluorescent dye is pyranine.
(14) The polymer particles as described in any one of (1) to (6), in which (b) is a chromic material.
(15) The polymer particles as described in (14), in which the chromic material is a photochromic dye.
(16) The polymer particles as described in (15), in which the photochromic dye is a naphthopyran derivative.
(17) An aqueous dispersion having the polymer particles as described in any one of (1) to (16) dispersed in water and/or a solvent which dissolves a part of water or dissolves all of water in an arbitrary ratio.
(18) A mixed composition comprising the following (A), (B), and (C), and if necessary, (D):
   (A) the polymer particles as described in any one of (1) to (16) ;
   (B) a metal alkoxide and/or a partial hydrolysis condensate thereof;
   (C) water and/or a solvent which dissolves a part of water or dissolves all of water in an arbitrary ratio; and
   (D) a catalyst for a sol-gel reaction.
(19) An organic/inorganic composite comprising the polymer particles as described in any one of (1) to (16) and a metal oxide.
(20) A sensor comprising any of the polymer particles as described in any one of (1) to (16), the aqueous dispersion as described in (17), the mixed composition as described in (18), and the organic/inorganic composite as described in (19).
(21) A temperature detecting component comprising the polymer particles as described in any one of (7) to (10).
(22) An oxygen detecting component or an ion concentration detecting component comprising the polymer particles as described in (12) or (13).
(23) A chromic article comprising the polymer particles as described in any one of (14) to (16).
(24) The chromic article as described in (19), which is a photochromic optical article.

### EFFECT OF THE INVENTION

According to the present invention, it is possible to provide a sensor that can detect a change in environment such as temperature with high accuracy, is excellent in repeated use, and can be used stably even in an aqueous environment; polymer particles to be used to obtain such a sensor; and polymer particles to be used to obtain a chromic material that can respond to a change in environment such as light and heat with high accuracy and is excellent in repeated use.

### BRIEF DESCRIPTION OF THE DRAWINGS

The subjects as described above and other subjects, characteristics, and advantages will be more apparent with reference to preferred embodiments as described later with the accompanying figures.
FIG. 1 is a view illustrating a change in fluorescence intensity observed at an excitation wavelength of 396 nm of an aqueous dispersion containing temperature-sensitive fluorescent dye-containing copolymer particles.
FIG. 2 is a view illustrating a percentage of change in the fluorescence intensity at a peak wavelength of the fluorescence observed at an excitation wavelength of 396 nm of an aqueous dispersion containing temperature-sensitive fluorescent dye-containing copolymer particles.
FIG. 3 is a view illustrating a change in fluorescence intensity observed at an excitation wavelength of 495 nm of an aqueous dispersion containing temperature-sensitive fluorescent dye/non-temperature-sensitive fluorescent dye-containing copolymer particles.
FIG. 4 is a view illustrating the oxygen responsiveness of the fluorescence intensity observed at an excitation wavelength of 376 nm of an aqueous dispersion containing oxygen-sensitive fluorescent dye-containing copolymer particles.
FIG. 5 is a view illustrating the fluorescence intensity observed at an excitation wavelength of 376 nm of an aqueous dispersion containing oxygen-sensitive fluorescent dye-containing copolymer particles, oxygen-sensitive fluorescent dye THF solution.
FIG. 6 is a view illustrating a change in fluorescence intensity observed at a wavelength of 420 nm depending on a change in pH when excited at 365 nm of an aqueous dispersion containing pH-sensitive fluorescent dye-containing copolymer particles and an aqueous solution of a pH-sensitive fluorescent dye.
FIG. 7 is a view illustrating the excitation spectrum at a fluorescence wavelength of 510 nm of an aqueous dispersion containing pyranine-containing copolymer particles at a pH of 3.1 to 11.3.
FIG. 8 is a view illustrating the change in the ratio of a fluorescence intensity at an excitation wavelength of 451 nm to a fluorescence intensity at an excitation wavelength 415 nm (excitation wavelength 451 nm/excitation wavelength 415 nm) when measuring a change in the fluorescent spectrum at a light wavelength of 510 nm due to a change in the pH of an aqueous dispersion containing pH-sensitive fluorescent dye-containing copolymer particles and an aqueous solution of a pH-sensitive fluorescent dye by scanning with excitation light in the range of 300 nm to 500 nm.
FIG. 9 is a photographic view illustrating the colored state (a) and the decolored state (b) of each of the film (i) and the film (ii).

### DESCRIPTION OF EMBODIMENTS

Hereinafter, the embodiments of the present invention will be described in detail.

### <Polymer Particles>

The polymer particles of the present invention comprise the following components (a) and (b), and have an average particle diameter of 50% by volume of equal to or more than 1 nm and equal to or less than 1000 nm:
(a) an amphiphilic polymer; and
(b) a compound exhibiting a change in fluorescence characteristics in response to a change in a specific environment.

Hereinafter, the (a) amphiphilic polymer will be described.

The amphiphilic polymer is a polymer having a hydrophobic group and a hydrophilic group. Examples of a method for obtaining the amphiphilic polymer include a synthesis method of copolymerization of a hydrophilic polymer and a hydrophobic polymer, and a method of grafting either one of a hydrophobic polymer or a hydrophilic polymer to the functional group of the other. Examples of the hydrophobic polymer include polyolefins, polyacrylates or polymethacrylates having a mesogen side chain, a long alkyl side chain, or a hydrophobic side chain, polystyrenes, and vinyl polymers. Examples of the hydrophilic polymer include polyethylene oxide, polypropylene oxide, polyvinyl alcohols, polyacrylic acids, polymethacrylic acids, polyacrylamides, polyacrylates having a hydrophilic side chain, polymethacrylates having a hydrophilic side chain, and polysaccharides.

When dispersed in a dispersion medium such as water, the amphiphilic polymers of the present invention preferably have a constant particle diameter regardless of the dilution concentration.

### [Terminally Branched Copolymer]

The (a) amphiphilic polymer of the present invention is preferably a terminally branched copolymer having a structure represented by the following general formula (1).

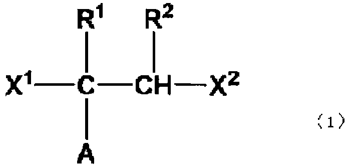

Wherein, in the formula (1), A represents a polyolefin chain; R¹ and R² each represent a hydrogen atom or an alkyl group having 1 to 18 carbon atoms, and at least one of R¹ and R² is a hydrogen atom; and X¹ and X² are the same as or different from each other and each represent a group containing a linear or branched polyalkylene glycol group.

The number average molecular weight of the terminally branched copolymer represented by the general formula (1) is equal to or less than 2.5 × 10⁴, preferably equal to or less than 1.5 × 10⁴, and more preferably equal to or less than 4.0 × 10³, and preferably equal to or more than 5.5 × 10², and more preferably equal to or more than 8 × 10². The number average molecular weight is represented by the sum of the number average molecular weight of the polyolefin chain represented by A, the number average molecular weight of the polyalkylene glycol group represented by X¹ and X², and the molecular weight of the R¹, R², and C₂H portions.

If the number average molecular weight of the terminally branched copolymer is in the above range, it is preferable since the stability of particles in the dispersion tends to be excellent when the terminally branched copolymer particles are used as a dispersoid, the dispersibility in water and/or a solvent which dissolves a part of water or dissolves all of water in an arbitrary ratio tends to be excellent, and preparation of the dispersion becomes easy.

The polyolefin chain represented by A in the general formula (1) is formed by polymerizing an olefin having 2 to 20 carbon atoms. Examples of the olefin having 2 to 20 carbon atoms include α-olefins such as ethylene, propylene, 1-butene, and 1-hexene. In the present invention, the polymer may be a homopolymer or copolymer of these olefins, or even a product of copolymerization with other polymerizable unsaturated compounds in the range in which the properties are not impaired. Among these olefins, particularly preferred are ethylene, propylene, and 1-butene.

The number average molecular weight measured by gel permeation chromatography (GPC) of the polyolefin chain represented by A in the general formula (1) is from 400 to 8000, preferably from 500 to 4000, and more preferably from 500 to 2000. Here, the number average molecular weight is a value in terms of polystyrene standards.

When the number average molecular weight of the polyolefin chain represented by A is in the above range, it is preferable since the crystallinity of the polyolefin portion tends to be high, the stability of the dispersion tends to be better, and preparation of the dispersion tends to be easy due to low melt viscosity.

The ratio of the weight average molecular weight (Mw) to the number average molecular weight (Mn), both measured by GPC, of the polyolefin chain represented by A in the general formula (1), that is, the molecular weight distribution (Mw/Mn), is not particularly limited and is usually from 1.0 to a few tens, more preferably equal to or less than 4.0, and still more preferably equal to or less than 3.0.

When the molecular weight distribution (Mw/Mn) of the polyolefin chain represented by A in the general formula (1) is in the above range, it is preferable in view of the shape of particles in the dispersion and the uniformity of the particle diameter.

According to GPC, the weight average molecular weight (Mw), the number average molecular weight (Mn) and the molecular weight distribution (Mw/Mn) of the polyolefin chain represented by A may be measured using, for example, a GPC-150 manufactured by Millipore Corporation under the following conditions.
Separating column: TSK GNH HT (column size: diameter of 7.5 mm, length: 300 mm)
Column temperature: 140°C
Mobile phase: ortho-dichlorobenzene (manufactured by Wako Pure Chemical Industries, Ltd.)
Anti-oxidant: 0.025% by mass of butylhydroxytoluene (manufactured by Takeda Pharmaceutical Co., Ltd.)
Flow rate: 1.0 ml/min
Sample concentration: 0.1% by mass
Sample injection amount: 500 µl
Detector: differential refractometer

Incidentally, the molecular weight of the polyolefin chain represented by A may be measured by measuring the molecular weight of the polyolefin having an unsaturated group at one terminal as described later and subtracting the corresponding amount of the terminal molecular weight.

R¹ and R² are each a hydrogen atom or a hydrocarbon group having 1 to 18 carbon atoms, which is a substituent bonded to a double bond of the olefin constituting A and preferably a hydrogen atom or an alkyl group having 1 to 18 carbon atoms. Preferred examples of the alkyl group include a methyl group, an ethyl group, and a propyl group.

In the general formula (1), X¹ and X² are the same as or different from each other and each represent a linear or branched polyalkylene glycol group having a number average molecular weight of 50 to 10000. A branched embodiment of the branched polyalkyleneglycol group is a branch linked through a polyvalent hydrocarbon group or a nitrogen atom, and the like. Examples thereof include a branch from a hydrocarbon group bonded to two or more nitrogen atoms, oxygen atoms, or sulfur atoms in addition to the main skeleton, a branch from a nitrogen atom bonded to two alkylene groups in addition to the main skeleton, and the like.

When the number average molecular weight of the polyalkylene glycol group is in the above range, it is preferable since the dispersibility of the dispersion tends to be better and preparation of the dispersion becomes easy due to the low melt viscosity.

X¹ and X² in the general formula (1) have the aforementioned structure, whereby polymer particles composed of a terminally branched copolymer having an average particle diameter of 50% by volume of equal to or more than 1 nm and equal to or less than 1000 nm is obtained without using a surfactant.

In the general formula (1), preferred examples of X¹ and X², which may be the same as or different from each other, include a group represented by the general formula (2) or (4).

-E-X³ (2)

Wherein, in the formula (2), E represents an oxygen atom or a sulfur atom; and X³ represents a polyalkylene glycol group or a group represented by the general formula (3),

-R³-(G)ₘ (3)

wherein, in the formula (3), R³ represents an (m+1)-valent hydrocarbon group; Gs are the same as or different from each other and each represent a group represented by -OX⁴ or -NX⁵X⁶ (X⁴ to X⁶ each represent a polyalkylene glycol group); and m is the bonding number for R³ to group G, and represents an integer of 1 to 10.

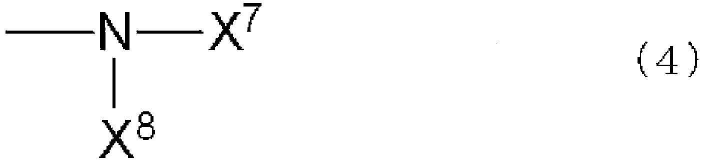

Wherein, in the formula (4), X⁷ and X⁸ are the same as or different from each other and each represent a polyalkylene glycol group or a group represented by the general formula (3).

In the general formula (3), the group represented by R³ is an (m+1)-valent hydrocarbon group having 1 to 20 carbon atoms. m is 1 to 10, preferably 1 to 6, and particularly preferably 1 to 2.

Preferred examples of the general formula (1) include a terminally branched copolymer in which, in the general formula (1), one of X¹ and X² is a group represented by the general formula (4). More preferred examples include a terminally branched copolymer in which one of X¹ and X² is a group represented by the general formula (4) and the other is a group represented by the general formula (2).

Other preferred examples of the general formula (1) include a terminally branched copolymer in which, in the general formula (1), one of X¹ and X² is a group represented by the general formula (2), and still more preferred examples include a terminally branched copolymer in which both X¹ and X² are each a group represented by the general formula (2).

A more preferred structure of the general formula (4) is a group represented by the general formula (5).

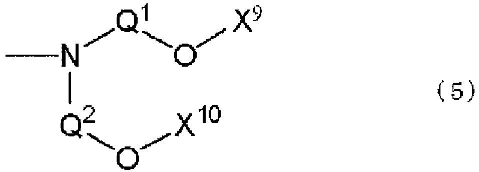

Wherein, in the formula (5), X⁹ and X¹⁰ are the same as or different from each other and each represent a polyalkylene glycol group; and Q¹ and Q² are the same as or different from each other and each represent a divalent hydrocarbon group.

The divalent hydrocarbon group represented by Q¹ and Q² in the general formula (5) is preferably a divalent alkylene group, and more preferably an alkylene group having 2 to 20 carbon atoms. The alkylene group having 2 to 20 carbon atoms may have or may not have substituent(s), and examples of the alkylene group include an ethylene group, a methylethylene group, an ethylethylene group, a dimethylethylene group, a phenylethylene group, a chloromethylethylene group, a bromomethylethylene group, a methoxymethylethylene group, an aryloxymethylethylene group, a propylene group, a trimethylene group, a tetramethylene group, a hexamethylene group, and a cyclohexylene group. The alkylene group is preferably a hydrocarbon based alkylene group, particularly preferably an ethylene group or a methylethylene group, and more preferably an ethylene group. Q¹ and Q² may be one alkylene group, or may be a mixture of two or more kinds of alkylene groups.

A more preferred structure of X¹ and X² represented by the general formula (1) is a group represented by the general formula (6).

-O-X¹¹ (6)

Wherein, in the general formula (6), X¹¹ represents a polyalkylene glycol group.

The polyalkylene glycol group represented by X³ to X¹¹ is a group obtained by the addition polymerization of alkylene oxide. Examples of the alkylene oxide constituting the polyalkylene glycol group represented by X³ to X¹¹ include ethylene oxide, propylene oxide, butylene oxide, styrene oxide, cyclohexene oxide, epichlorohydrin, epibromohydrin, methyl glycidyl ether, and allyl glycidyl ether. Among these, preferred are propylene oxide, ethylene oxide, butylene oxide, and styrene oxide, more preferred are propylene oxide and ethylene oxide, and particularly preferred is ethylene oxide. The polyalkylene glycol group represented by X³ to X¹¹ may be a group obtained by homopolymerization of these alkylene oxides, or may be a group obtained by copolymerization of two or more kinds of alkylene oxides. Preferred examples of the polyalkylene glycol group include a polyethylene glycol group, a polypropylene glycol group, and a group obtained by copolymerization of polyethylene oxide and polypropylene oxide, and particularly preferred examples of the group include a polyethylene glycol group.

When X¹ and X² in the general formula (1) have the aforementioned structure, it is preferable since the dispersibility of water and/or a solvent which dissolves a part of water or dissolves all of water in an arbitrary ratio becomes better when the terminally branched copolymer of the present invention is used as a dispersoid.

As the terminally branched copolymer which can be used in the present invention, it is preferable to use a polymer represented by the following general formula (1a) or (1b). 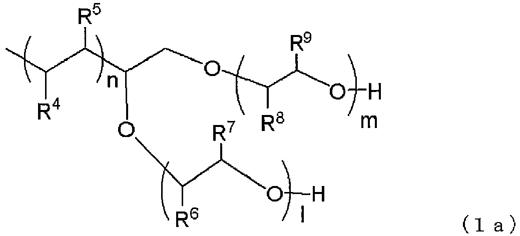
Wherein, in the formula (1a), R⁴ and R⁵ each represent a hydrogen atom or an alkyl group having 1 to 18 carbon atoms, and at least one of R⁴ and R⁵ is a hydrogen atom, and the alkyl group is preferably an alkyl group having 1 to 9 carbon atoms, and more preferably an alkyl group having 1 to 3 carbon atoms;
R⁶ and R⁷ each represent a hydrogen atom or a methyl group, and at least one of R⁶ and R⁷ is a hydrogen atom; R⁸ and R⁹ each represent a hydrogen atom or a methyl group, and at least one of R⁸ and R⁹ is a hydrogen atom;
1 + m represents an integer of equal to or more than 2 and equal to or less than 450, and preferably equal to or more than 5 and equal to or less than 200; and
n represents an integer of equal to or more than 20 and equal to or less than 300, and preferably an integer of equal to or more than 25 and equal to or less than 200.

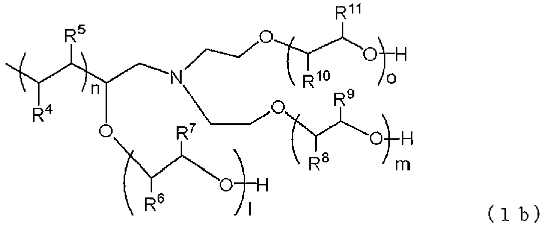

Wherein, in the formula (1b), R⁴ and R⁵ each represent a hydrogen atom or an alkyl group having 1 to 18 carbon atoms, and at least one of R⁴ and R⁵ is a hydrogen atom; and the alkyl group is preferably an alkyl group having 1 to 9 carbon atoms, and more preferably an alkyl group having 1 to 3 carbon atoms;
R⁶ and R⁷ each represent a hydrogen atom or a methyl group, and at least one of R⁶ and R⁷ is a hydrogen atom; R⁸ and R⁹ each represent a hydrogen atom or a methyl group, and at least one of R⁸ and R⁹ is a hydrogen atom; R¹⁰ and R¹¹ each represent a hydrogen atom or a methyl group, and at least one of R¹⁰ and R¹¹ is a hydrogen atom;
1 + m + o represents an integer of equal to or more than 3 and equal to or less 450, and preferably equal to or more than 5 and equal to or less than 200; and
n represents an integer of equal to or more than 20 and equal to or less than 300, and preferably equal to or more than 25 and equal to or less than 200.

As the polymer represented by the general formula (1b), a polymer represented by the following general formula (1c) is more preferably used.

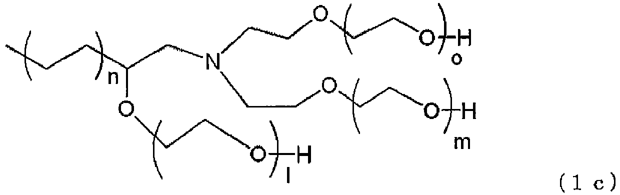

Wherein, in the formula (1c), 1 + m + o and n are the same as those in the general formula (1b).

The number (n) of ethylene units of the polyethylene chain is calculated by dividing the number average molecular weight (Mn) of the polyolefin chain represented by A in the general formula (1) by the molecular weight of the ethylene unit. Further, the total number (1 + m or 1 + m + o) of ethylene glycol units of the polyethylene glycol chain is calculated on the assumption that the weight ratio of the polymer raw material to ethylene oxide in use during the addition reaction to synthesize the polyethylene glycol group is the same as the ratio of the polymer raw material to the number average molecular weight (Mn) of the polyethylene glycol group.

For example, in the terminally branched copolymer (T) obtained in Synthesis Example 1 of this Example, since the weight ratio of the polymer raw material (I) to ethylene oxide in use is 1:1, Mn of the polymer raw material (I) is 1223 and Mn of an extended ethylene glycol unit also becomes 1223. The total number (1 + m + o) of ethylene glycol units of the polyethylene glycol chain can be calculated by dividing this value by the molecular weight of the ethylene glycol unit.

Furthermore, n, 1 + m, or 1 + m + o can also be measured by ¹H-NMR. For example, in the terminally branched copolymer (T) obtained in Synthesis Example 1 and particles in the dispersion system containing the copolymer (T), it can be calculated from the integrated value for the methylene group of the polyolefin chain represented by A (shift value: 1.06 ppm - 1.50 ppm) and the integrated value for the alkylene group of the polyethylene glycol chain (shift value: 3.33 ppm - 3.72 ppm) when the integrated value for the methyl group at the terminal of the polyolefin chain represented by A in the general formula (1) (shift value: 0.88 ppm) is taken as three-protons.

Specifically, the number average molecular weight of the polyolefin chain represented by A and the alkylene group can be calculated from the respective integrated values from the facts that the molecular weight of the methyl group is 15, the molecular weight of the methylene group is 14, and the molecular weight of the alkylene group is 44. n can be calculated by dividing the number average molecular weight of the polyolefin chain represented by A obtained herein by the molecular weight of the ethylene unit, while the total number (1 + m or 1 + m + o) of the ethylene glycol units of the polyethylene glycol chain can be calculated by dividing the number average molecular weight of the alkylene group by the molecular weight of the ethylene glycol unit.

In the case where the polyolefin chain represented by A is composed of an ethylene-propylene copolymer, n and 1 + m or 1 + m + o can be calculated by using both the content of propylene which can be measured by IR, ¹³C-NMR, or the like, and the integrated value in ¹H-NMR. In ¹H-NMR, a method of using an internal standard is also effective.

### [Method for Preparing Terminally Branched Copolymer]

The terminally branched copolymer can be prepared by the following methods.

First, in the target terminally branched copolymer, a polyolefin represented by the general formula (7) and having a double bond at one terminal is prepared as the polymer corresponding to the structure of A represented by the general formula (1).

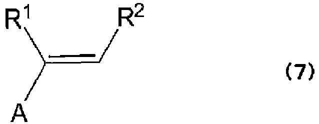

Wherein, in the formula (7), A represents a polyolefin chain, and preferably a group having a number average molecular weight of 400 to 8000, obtained by the polymerization of an olefin having 2 to 20 carbon atoms; and R¹ and R² are each a hydrogen atom or an alkyl group having 1 to 18 carbon atoms, and at least one of R¹ and R² represents a hydrogen atom.

This polyolefin may be prepared according to the following methods:
(1.1) A polymerization method of using a transition metal compound having a salicylaldimine ligand as described in Japanese Unexamined Patent Publication No. 2000-239312, Japanese Unexamined Patent Publication No. 2001-2731, Japanese Unexamined Patent Publication No. 2003-73412, and the like, as the polymerization catalyst;
(1.2) A polymerization method of using a titanium-based catalyst comprising a titanium compound and an organic aluminum compound;
(1.3) A polymerization method of using a vanadium-based catalyst comprising a vanadium compound and an organic aluminum compound; and
(1.4) A polymerization method using a Ziegler type catalyst comprising a metallocene compound such as zirconocene and an organic aluminum oxy compound (aluminoxane).

Among the methods (1.1) to (1.4), in particular, according to the method (1.1), the polyolefin can be prepared in a good yield. In the method (1.1), the polyolefin having a double bond at one terminal can be prepared by polymerizing or copolymerizing the above-mentioned olefin in the presence of the transition metal compound having a salicylaldimine ligand.

The polymerization of olefin according to method (1.1) can be carried out by either a liquid phase polymerization method such as solution polymerization or suspension polymerization, or a gas phase polymerization method. Detailed conditions and the like are already known and the polyolefin can be prepared by referring to the Patent Documents above.

The molecular weight of the polyolefin obtained according to method (1. 1) can be adjusted by adding hydrogen to the polymerization system, by varying the polymerization temperature, or by changing the kind of catalyst in use.

Subsequently, the polyolefin is epoxidized, that is, the double bonds at the terminals of the polyolefin are oxidized, to obtain a terminal epoxy group-containing polymer represented by the general formula (8).

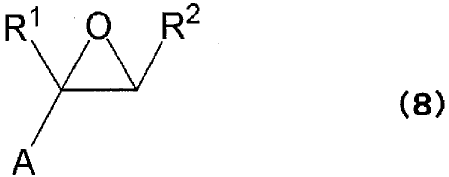

Wherein, in the formula (8), A represents a polyolefin chain, and preferably a group having a number average molecular weight of 400 to 8000, obtained by the polymerization of an olefin having 2 to 20 carbon atoms; and R¹ and R² are each a hydrogen atom or an alkyl group having 1 to 18 carbon atoms, and at least one of R¹ and R² represents a hydrogen atom.

Such an epoxidation method is not particularly limited, but can be exemplified by the following methods:
(2.1) Oxidation by peracids such as performic acid, peracetic acid, and perbenzoic acid
(2.2) Oxidation by titanosilicate and hydrogen peroxide;
(2.3) Oxidation by a rhenium oxide catalyst such as methyltrioxorhenium, and hydrogen peroxide;
(2.4) Oxidation by a porphyrin complex catalyst such as manganese porphyrin and iron porphyrin, and hydrogen peroxide or hypochlorite;
(2.5) Oxidation by a salen complex such as manganese salen, and hydrogen peroxide or hypochlorite;
(2.6) Oxidation by a TACN complex such as a manganese triazacyclononane (TACN) complex, and hydrogen peroxide; and
(2.7) Oxidation by hydrogen peroxide in the presence of a Group VI transition metal catalyst such as a tungsten compound, and a phase transfer catalyst.

Among the methods (2.1) to (2.7), the methods (2.1) and (2.7) are particularly preferred in view of activity.

Further, for example, a terminal epoxy group-containing polymer having a low molecular weight Mw of about 400 to 600 that can be used is VIKOLOX™ (registered trademark, manufactured by Arkema Inc.).

It is possible to obtain a polymer (polymer (I)) in which various substituents Y¹ and Y² are introduced into α- and β-positions at the terminals of the polymer as represented by the general formula (9) by reacting various reaction reagents with the terminal epoxy group-containing polymer represented by the general formula (8) obtained according to the methods above.

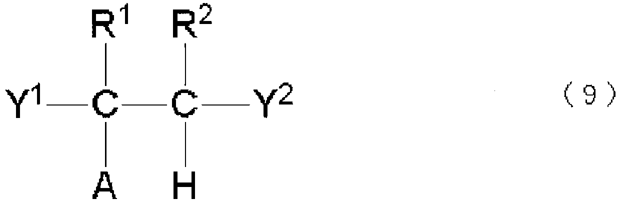

Wherein, in the formula (9), A represents a polyolefin chain, and preferably a group having a number average molecular weight of 400 to 8000, obtained by the polymerization of an olefin having 2 to 20 carbon atoms; R¹ and R² are each a hydrogen atom or an alkyl group having 1 to 18 carbon atoms, and at least one of R¹ and R² represents a hydrogen atom; and Y¹ and Y² are the same as or different from each other and each represent a hydroxyl group, an amino group, or the following general formulae (10a) to (10c).

-E-R³-(T)ₘ (10a)

-N(̵R³-(T)ₘ)₂ (10b)

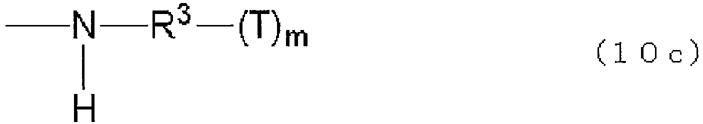

Wherein, in the general formulae (10a) to (10c), E represents an oxygen atom or a sulfur atom; R³ represents an (m+1)-valent hydrocarbon group; Ts are the same as or different from each other and each represent a hydroxyl group or an amino group; and m represents an integer of 1 to 10.

For example, a polymer in which, in the general formula (9), both Y¹ and Y² are each a hydroxyl group is obtained by the hydrolysis of the terminal epoxy group-containing polymer represented by the general formula (8), while a polymer in which one of Y¹ and Y² is an amino group and the other is a hydroxyl group is obtained by the reaction with ammonia.

Furthermore, a polymer in which, in the general formula (9), one of Y¹ and Y² is a group represented by the general formula (10a) and the other is a hydroxyl group is obtained by reacting the terminal epoxy group-containing polymer represented by the general formula (8) with a reaction reagent A represented by the general formula (11a).

HE-R³-(T)ₘ (11a)

Wherein, in the formula (11a), E represents an oxygen atom or a sulfur atom; R³ represents an (m+1)-valent hydrocarbon group; Ts are the same as or different from each other and each represent a hydroxyl group or an amino group; and m represents an integer of 1 to 10.

Furthermore, a polymer in which, in the general formula (9), one of Y¹ and Y² is a group represented by the general formula (10b) or (10c) and the other is a hydroxyl group is obtained by reacting the terminal epoxy group-containing polymer with a reaction reagent B represented by the general formula (11b) or (11c).

HN(̵R³-(T)ₘ)₂ (11b)

H₂N-R³-(T)ₘ (11c)

Wherein, in the formulae (11b) and (11c), R³ represents an (m+1)-valent hydrocarbon group; Ts are the same as or different from each other and each represent a hydroxyl group or an amino group; and m represents an integer of 1 to 10.

Examples of the reaction reagent A represented by the general formula (11a) include glycerin, pentaerythritol, butanetriol, dipentaerythritol, polypentaerythritol, dihydroxybenzene, and trihydroxybenzene.

Examples of the reaction reagent B represented by the general formula (11b) or (11c) include ethanolamine, diethanolamine, aminophenol, hexamethyleneimine, ethylenediamine, diaminopropane, diaminobutane, diethylenetriamine, N-(aminoethyl)propanediamine, iminobispropylamine, spermidine, spermine, triethylenetetramine, and polyethyleneimine.

The addition reaction of an epoxy compound with alcohols, or amines is well-known, and the reaction can be easily carried out according to a usual method.

The compound represented by the general formula (1) can be prepared by carrying out an addition polymerization of the alkylene oxide using the polymer (I) represented by the general formula (9) as a raw material. Examples of the alkylene oxide include propylene oxide, ethylene oxide, butylene oxide, styrene oxide, cyclohexene oxide, epichlorohydrin, epibromohydrin, methyl glycidyl ether, and allyl glycidyl ether. These may be used in combination of two or more kinds. Among these, propylene oxide, ethylene oxide, butylene oxide, and styrene oxide are preferably used, and propylene oxide and ethylene oxide are more preferably used.

For the catalyst, the polymerization conditions, and the like, known ring-opening polymerization methods for alkylene oxide can be used, and examples of obtaining a polyol by polymerizing various monomers are disclosed in "Revised Polymer Synthesis Chemistry," authored by Otsu Takayuki, Kagaku-Dojin Publishing Company, Inc., January 1971, pp. 172 - 180. Examples of the catalyst used in the ring-opening polymerization include, as described in the above literature, Lewis acids such as AlCl₃, SbCl₅, BF₃, and FeCl₃ for cationic polymerization; hydroxides or alkoxides of alkali metals, amines and phosphazene catalysts for anionic polymerization; and oxides, carbonates, and alkoxides of alkaline earth metals, or alkoxides of Al, Zn, Fe, or the like for coordination anionic polymerization. Here, the phosphazene catalysts may be exemplified by those compounds described in Japanese Unexamined Patent Publication No. 10-77289, specifically the products resulting from changing the anion of commercially available tetrakis[tris(dimethylamino)phosphoranylidenamino]phosphonium chloride into an alkoxy anion by using an alkoxide of an alkali metal.

In the case where a reaction solvent is used, those inert to the polymer (I) and the alkylene oxide can be used, and examples of the solvent include n-hexane, alicyclic hydrocarbons such as cyclohexane, aromatic hydrocarbons such as toluene and xylene, ethers such as dioxane, and halogenated hydrocarbons such as dichlorobenzene.

The amount of the catalyst to be used for the catalysts other than phosphazene catalysts is preferably in the range of 0.05 moles to 5 moles, and more preferably in the range of 0.1 moles to 3 moles, based on 1 mole of the polymer (I) as a raw material. The amount of phosphazene catalyst to be used is preferably from 1 × 10⁻⁴ moles to 5 × 10⁻¹ moles and more preferably from 5 × 10⁻⁴ moles to 1 × 10⁻¹ moles, based on 1 mole of the polymer (I), from the viewpoints of a polymerization rate, economic efficiency, and the like.

The reaction temperature is usually from 25°C to 180°C and preferably from 50°C to 150°C, and although the reaction time varies depending on the reaction conditions such as the amount of the catalyst to be used, the reaction temperature, the reactivity of olefins, or the like, it is usually from a few minutes to 50 hours.

The number average molecular weight of the terminally branched copolymer represented by the general formula (1) can be calculated by a method of calculating it from the number average molecular weight of the polymer (I) represented by the general formula (8) as described above and the weight of the alkylene oxide to be polymerized, or a method of using nuclear magnetic resonance (NMR).

The polymer particles of the present invention, comprising such a terminally branched copolymer, have a structure in which the polyolefin chain portion represented by A in the general formula (1) is oriented in an internal direction, and are rigid particles in which this polyolefin chain portion has crystallinity.

The polymer particles of the present invention can be dispersed again in a liquid such as a solvent even after particles are taken out of the dispersion by drying since the polyolefin chain portion thereof has crystallinity. The polymer particles of the present invention are rigid particles in which the melting point of the polyolefin chain portion contained in the particles is not lower than 80°C and preferably not lower than 90°C.

Examples 52 and 53 of Patent Document (the pamphlet of International Publication No. 2005/073282) disclose a method of obtaining micelles having an average particle diameter of from 15 nm to 20 nm using this terminally branched copolymer. However, the method disclosed in the document is a method of using the toluene soluble fraction in which the terminally branched copolymer is fractionated into a toluene soluble portion and a toluene insoluble portion, and the polyethylene chain portion of the terminally branched copolymer has a low molecular weight. Specifically, the terminally branched copolymer is melted under heating in the presence of toluene, and then a slurry liquid after cooling is separated by filtration and toluene is distilled off from the toluene solution, followed by drying, to obtain a polymer. The resultant polymer is mixed with water, stirred while boiling under normal pressure, further stirred using ultrasonic waves, and cooled to room temperature.

In polyethylene, there is a correlation between the molecular weight and the melting point such that a lower molecular weight indicates a lower melting point. Also, Examples 52 and 53 of the Patent Document (the pamphlet of International Publication No. 2005/073282) disclose that the melting point of the toluene insoluble portion is not lower than 100°C, and the melting point of the toluene soluble portion is around 70°C. Even though micelles disclosed in the Patent Document are cooled, it is possible to obtain particles obtained by crystallizing the polyethylene chain portion, whereas it is not possible to obtain rigid particles since the melting point is too low giving insufficient crystallinity. Furthermore, there are some points to be improved, for example, micelles are easily obtained by heating, but particle properties are easily lost due to disintegrating particles.

On the other hand, the polymer particles of the present invention are rigid particles with excellent crystallinity since the melting point of the polyolefin chain portion is in the aforementioned range, and disintegration of particles is suppressed even under heating at a higher temperature.

Accordingly, in the production process and use situations for various uses as described later, disintegration of particles is suppressed so that the yield of the products and the quality of the products are more stabilized without losing characteristics of the polymer particles of the present invention.

Even when the polymer particles of the present invention are dispersed in a solvent or the like, the particle diameter is constant regardless of the dilution concentration. Namely, the polymer particles are different from micelle particles dispersed in a liquid because the polymer particles have redispersibility and uniform dispersion particle diameter. Further, the amphiphilic polymer particles of the present invention can be applied in pH sensing since they may be dispersed in water at a high concentration without the addition of a surfactant as well as the addition of anionic/cationic components (neutral region), unlike styrene-based emulsion particles, acryl-based emulsion particles, or the like.

In addition, the amphiphilic polymer particles of the present invention can be used in a buffer solution, and therefore, can inhibit damage to cells to a least extent and can be applied in bio-imaging uses.

Incidentally, the average particle diameter of 50% by volume of the polymer particles of the present invention is preferably equal to or more than 1 nm. Thus, the dispersion characteristics of the fluorescent material become uniform, thereby obtaining dispersion stability of the polymer particles themselves in a solvent. Further, the average particle diameter of 50% by volume is preferably equal to or less than 1000 nm, which can makes it possible to perform bio-imaging in a microscopic region. Further, from the viewpoint of sensing local information in cells or of transparency of a coating component, the average particle diameter of 50% by volume is preferably equal to or less than 500 nm, more preferably equal to or less than 100 nm, and still more preferably equal to or less than 30 nm. In the case of a use in a photochromic optical component, the average particle diameter of 50% by volume is necessarily equal to or less than 30 nm so as to avoid the effects of light scattering.

Furthermore, since the polymer particles of the present invention are amphiphilic polymer particles, it is difficult for the particles to aggregate even when they have particle diameters of equal to or less than 30 nm.

The particle diameter of the polymer particles is measured using a dynamic light-scattering Nanotrac particle size analyzer "Microtrack UPA-EX150, manufactured by Nikkiso Co., Ltd.". Specifically, the prepared dispersion is added dropwise to the analyzer so as to have an appropriate concentration and uniformly dispersed, and then average particle diameters of 10%, 50%, and 90% by volume can be measured.

The shape of the particle can be observed, for example, using a transmission electron microscope (TEM) after carrying out negative staining with phosphotungstic acid.

Hereinafter, the (b) compound exhibiting a change in fluorescence characteristics in response to a change in a specific environmental factor (hereinafter also referred to as a sensor compound) will be described.

The sensor compound refers to a compound exhibiting a change in fluorescent characteristics as shown below in response to a change in an environmental factor as shown below, provided that the change in the environmental factor and the change in the fluorescent characteristics are correlated.

Examples of the environmental factor include temperature, pressure, oxygen, metals, and pH. In order to make the compound function as a sensor, the compound preferably senses a change in only one environmental factor, but does not sense a change in other environmental factors. In addition, it is also preferable that the compound sense only a change in the temperature and a change in the pressure, but does not sense a change in other environmental factors.

Examples of the fluorescent characteristics include a fluorescence intensity, a quenching speed, a fluorescent lifetime, and a fluorescence wavelength shift.

Examples of the sensor compound include compounds that exhibit a change in the fluorescent characteristics, such as a temperature-sensitive fluorescent dye, a pressure-sensitive fluorescent dye, an oxygen-sensitive fluorescent dye, a metal (metal ion)-sensitive fluorescent dye, and a pH (acid and base)-sensitive fluorescent dye.

First, the (b) compound exhibiting a change in fluorescence characteristics in response to a change in a specific environmental factor will be described.

### [Temperature-Sensitive Fluorescent Dye]

Examples of the temperature-sensitive fluorescent dye for use in the present invention include compounds having a linear change in fluorescence intensity in response to temperature. Desirably, in a predetermined temperature range, the compound exhibits a change in fluorescence intensity of preferably equal to or more than 0.1%/1C, and more preferably equal to or more than 1.0%/1°C. Suitably, used is a complex compound of a rare earth element selected from europium (Eu), lanthanum (La), samarium (Sm), gadolinium (Gd), terbium (Tb), dysprosium (Dy), thulium (Tm), ytterbium (Yb), and lutetium (Lu) with β-diketone chelating compounds, or a complex compound of iridium (Ir) with aromatic compounds. Among these, preferred are a complex compound of europium with β-diketone chelating compounds and a complex compound of iridium (Ir) with aromatic compounds. Specifically, tris(thenoyltrifluoroacetonate)europium (III) (Eu (III)(TTA)₃) or a derivative (a hydrate or the like) thereof, tris(benzoylacetonate)europium (III) (Eu (III)(bac)₃), tris(dibenzoylmethanate)europium (III) (Eu (III)(dbm)₃), tris(hexafluoroacetylacetonate)europium (III) (Eu (III)(hfacac)₃), tris(acetylacetonate)europium (III) (Eu (III)(acac)₃), (1,10-phenanthroline)tris(thenoyltrifluoroacetate)europium (III) (Eu (III)(TTA)₃PHEN), and tris(2-phenylpyridine)iridium(III) (Ir(III)(ppy)₃), and in particular, in view of a high yield of fluorescence at around room temperature, or the like, tris(thenoyltrifluoroacetonate)europium (III) (Eu (III)(TTA)₃) or a derivative (a hydrate or the like) thereof is most preferably used.

In the case where the temperature-sensitive fluorescent dye-containing copolymer particles are immobilized with a concentration difference, it is possible that a variation in the fluorescence intensity occurs, resulting in an error in a temperature detecting element. The variation can be corrected by further incorporating a non-temperature-sensitive fluorescent dye as a reference. Preferably, the non-temperature-sensitive fluorescent dye does not have a wavelength distribution overlapping that of the fluorescence of the temperature-sensitive fluorescent dye used. In the case where an Eu complex is excited with light in the vicinity of 300 nm, fluorescence can be found in the vicinity of 600 nm (red light). As a reference, a fluorescent dye having a fluorescence found at equal to or less than 500 nm (blue to green light) is preferred, and examples of the fluorescent dye include fluorescein and a derivative thereof, a rhodamine derivative, and a cyanine derivative, and specifically fluorescein isothiocyanate (FITC) and rhodamine B.

### [Pressure-Sensitive Fluorescent Dye]

Examples of the pressure-sensitive fluorescent dye include a dye having a fluorescence exhibiting a quenching property when sensing a pressure. Specific examples of such a pressure-sensitive fluorescent dye include perylene; metal porphyrin compounds such as platinum porphyrin and zinc porphyrin; tris(thenoyltrifluoroacetonate)europium (III) (Eu (III)(TTA)₃) or a hydrate thereof, tris(benzoylacetonate)europium (III) (Eu (III)(bac)₃), tris(dibenzoylmethanate)europium (III) (Eu (III)(dbm)₃), tris(hexafluoroacetylacetonate)europium (III) (Eu (III)(hfacac)₃), tris(acetylacetonate)europium (III) (Eu (III)(acac)₃), (1,10-phenanthroline)tris(thenoyltrifluoroacetate)europium (III) (Eu (III)(TTA)₃PHEN); ruthenium (Ru) complexes such as tris(2,2'-bipyridine)ruthenium(II) (Ru(II)(bpy)₃) and tris(2,2'-bipyrazine)ruthenium(II) (Ru(II)(bpz)₃); and iridium (Ir) such as tris(2-phenylpyridineiridium(III) (Ir(III)(ppy)₃).

### [Oxygen-Sensitive Fluorescent Dye]

Examples of the oxygen-sensitive fluorescent dye include a dye having a fluorescence exhibiting a quenching property due to oxygen. Specific examples of such an oxygen-sensitive fluorescent dye include metal porphyrin compounds such as platinum porphyrin and zinc porphyrin; tris(thenoyltrifluoroacetonate)europium (III) (Eu (III)(TTA)₃) or a hydrate thereof, tris(benzoylacetonate)europium (III) (Eu (III)(bac)₃), tris(dibenzoylmethanate)europium (III) (Eu (III)(dbm)₃), tris(hexafluoroacetylacetonate)europium (III) (Eu (III)(hfacac)₃), tris(acetylacetonate)europium (III) (Eu (III)(acac)₃), (1,10-phenanthroline)tris(thenoyltrifluoroacetate)europium (III) (Eu (III)(TTA)₃PHEN); ruthenium (Ru) complexes such as tris(2,2'-bipyridine)ruthenium(II) (Ru(II)(bpy)₃) and tris(2,2'-bipyrazine)ruthenium(II) (Ru (II) (bpz)₃); and iridium (Ir) such as tris(2-phenylpyridine)iridium(III) (Ir(III)(ppy)₃).

### [Metal (Metal Ion)-Sensitive Fluorescent Dye, Metal (Metal Ion)-Sensitive Fluorescent Protein]

The metal-sensitive fluorescent dye is a dye showing fluorescence by binding to metal ions such as Ca²⁺, Ni²⁺, Cu²⁺, Zn²⁺, and Co²⁺, and representative examples of the metal-sensitive fluorescent dye include a Ca²⁺-sensitive fluorescent dye. Examples of the Ca²⁺-sensitive fluorescent dye include 4-(6-acetomethoxy-2,7-dichloro-3-oxo-9-xanthyl)-4'-methyl-2,2'-( ethylenedioxy)dianiline-N,N,N',N'-tetracetic acid tetrakis(acetoxymethyl) ester (Fluo-3, AM), N-[4-[6-[(acetoxy)methoxy]-2,7-difluoro-3-oxo-3H-xanthen-9-yl]-2 -[2-[2-[bis[(acetoxy)methoxy]-2-oxoethyl], (acetoxy)methyl ester (Fluo-4, AM), and fluorescent protein exhibiting a change in fluorescence intensity in response to the amount of metal ions. Specific examples of the fluorescent protein for use in the present invention include GFP, GFPuv, AcGFP, AcGFP1, HcRed1, DsRed-Monomer, DsRed2, ZsGreen1, ZsGreen1-DR, ZsYellow1, DsRed-Express2, DsRed-Monomer, mCherry, mOrange2, AmCyan, ZsProSesor, tdTomato, mPlum, pHcRed1-DR, DsRed-Express-DR, and pTimer Vectors.

### [pH (Acid or Base)-Sensitive Fluorescent Dye]

Examples of the pH-sensitive fluorescent dye include those exhibiting a change in fluorescence intensity depending on a change in the pH. Specific examples of the pH-sensitive fluorescent dye include pyranine, fluorescein diacetate, 5(6)-carboxyfluorescein diacetate, 5-carboxyfluorescein diacetate, 6-carboxyfluorescein diacetate, and 2',7'-bis(carboxyethyl)-5(6)-carboxyfluorescein tetracetoxymethyl ester.

The weight ratio of the (a) amphiphilic polymer to the (b) sensor compound is not particularly limited, but preferably, the ratio of (b) is from 0.01 parts by weight to 100 parts by weight with respect to 100 parts by weight of (a), and more preferably the ratio of (b) is from 1 part by weight to 10 parts by weight with respect to 100 parts by weight of (a).

In the case of using (c) a fluorescent material as a reference, the amount of the fluorescent material used is not particularly limited, but the ratio of (c) is from 0.001 parts by weight to 10 parts by weight with respect to 100 parts by weight of (b), and more preferably the ratio of (c) is from 0.01 parts by weight to 1 part by weight with respect to 100 parts by weight of (b).

Next, the (b) compound exhibiting a change in light absorption characteristics in response to a change in a specific environmental factor (hereinafter also referred to as a chromic material or a chromic dye) will be described.

Examples of the light absorption characteristics include an absorption spectrum, a percentage of change of intensity in light absorbance at a specific wavelength, and a change speed in intensity of light absorbance at a specific wavelength.

### [Photochromic Dye]

The photochromic dye exhibits a reversible change in the molecule structure due to irradiation with light at a specific wavelength, and thus a change in light absorption characteristics (absorption spectrum). Examples of the photochromic dye for use in the present invention include compounds exhibiting a change in light absorption characteristics (absorption spectrum) with respect to light at a specific wavelength. As the photochromic dye, known ones can be used, and examples of such a photochromic dye include naphthopyran, chromene, spiropyran, spirooxazine, and thiospiropyran, benzopyran, stilbene, azobenzene, thioindigo, bisimidazole, spirodihydroindolidine, quinine, perimidine spirocyclohexadienone, viologen, fulgide, fulgimide, diarylethene, hydrazine, anil, aryl disulfide, aryl thiosulfonate, spiroperimidine, and triarylmethane.

### [Thermochromic Dye]

The thermochromic dye exhibits a change in light absorption characteristics (absorption spectrum) depending on temperature. Examples of the thermochromic dye include leuco dyes, and specifically, phthalide, phthalane, an acylleucomethylene compound, fluoran, spiropyran, and coumarin. Specific examples of the fluoran include 3,3'-dimethoxyfluoran, 3,6-dimethoxyfluoran, 3,6-dibutoxyfluoran, 3-chloro-6-phenylamino-fluoran, 3-diethylamino-6-dimethylfluoran, 3-diethylamino-6-methyl-7-chlorofluoran, 3-diethyl-7,8-benzofluoran, 3,3'-bis-(p-dimethyl-aminophenyl)-7-phenylaminofluoran, 3-diethylamino-6-methyl-7-phenylamino-fluoran, 3-diethylamino-7-phenyl-aminofluoran, and 2-anilino-3-methyl-6-diethylamino-fluoran. Similarly, examples of the phthalide include 3,3',3"-tris(p-dimethylamino-phenyl)phthalide, 3,3-bis(p-dimethyl-aminophenyl)phthalide, 3,3-bis(p-diethylamino-phenyl)-6-dimethylaminophthalide, and 3-(4-diethylamino)phenyl.

Since such a change in the absorption spectrum is caused by a change in the molecule structures due to an acid-base reaction (protonation-deprotonation) of a molecule, a proton donor (also referred to as a "color developing agent") that generates an acid according to the temperature can also be used.

Examples of the proton donor include phenols, azoles, organic acids, and esters and salts of the organic acids.

Examples of phenols are phenylphenol, bisphenol A, cresol, resorcinol, chlorolucinol, β-naphthol, 1,5-dihydroxynaphthalene, pyrocatechol, pyrogallol, and a trimer of a p-chlorophenol-formaldehyde condensate. Examples of azoles are benzotriaoles (for example, 5-chlorobenzotriazole, 4-laurylaminosulfobenzotriazole, 5-butylbenzotriazole, dibenzotriazole, 2-oxybenzotriazole, and 5-ethoxycarbonylbenzotriazole), imidazoles (for example, oxybenzimidazole), and tetrazoles.

Examples of organic acids include aromatic carboxylic acids (for example, salicylic acid, resorcylic acid, and benzoic acid), and aliphatic carboxylic acids (for example, stearic acid, 1,2-hydroxystearic acid, tartaric acid, citric acid, oxalic acid, and lauric acid).

Further, in order to control the reaction by a thermochromic dye and a color developer, a proton receptor for receiving an acid depending on a temperature (also referred to as a "desensitizer") may also be used. Examples of the proton acceptor include polyalcohols, fatty acid esters, glycol ethers, and polyethylene glycol type nonionic surfactants.

### [Other Chromic Dyes]

Other examples of the chromic dye include an electrochromic dye exhibiting a change in light absorption characteristics due to electricity (application of voltages), and a solvatochromic dye exhibiting a change in light absorption characteristics due to the kind of a solvent in contact.

The weight ratio of the (a) amphiphilic polymer to the (b) chromic dye is not particularly limited, but the ratio of (b) is preferably from 0.01 parts by weight to 100 parts by weight with respect to 100 parts by weight of (a), and the ratio of (b) is more preferably from 1 part by weight to 10 parts by weight with respect to 100 parts by weight of (a).

### [Dispersion]

The dispersion of the present invention has the polymer particles in a dispersoid, in which the dispersoid is dispersed in the form of particles in water and/or a solvent which dissolves a part of water or dissolves all of water in an arbitrary ratio.

In the present invention, the dispersion is a dispersion formed by dispersing the polymer particles, and includes any one of:
(1) a dispersion having the polymer particles, obtained during the preparation of the polymer particles,
(2) a dispersion formed by further dispersing or dissolving other dispersoids or additives in a dispersion having the polymer particles, obtained during the preparation of the polymer particles, and
(3) a dispersion formed by further dispersing or dissolving other dispersoids or additives in a dispersion having the polymer particles while dispersing the polymer particles in water or an organic solvent having an affinity for water.

Further, in the present specification, the dispersion encompasses an aqueous dispersion.

The content of the polymer particles in the dispersion of the present invention is preferably 0.1% by mass to 50% by mass, more preferably 1% by mass to 40% by mass, and still more preferably from 1% by mass to 20% by mass, with respect to 100% by mass of the entire dispersion.

When the content of the polymer particles is in the above range, the practical usability of the dispersion is good, the viscosity can be appropriately maintained, and handleability becomes easier, and therefore, such a content is preferable.

Furthermore, the average particle diameter of 50% by volume of the particles in the dispersion of the present invention is preferably equal to or more than 1 nm and equal to or less than 1000 nm, more preferably equal to or more than 1 nm and equal to or less than 500 nm, still more preferably equal to or more than 5 nm and equal to or less than 50 nm, and even more preferably equal to or more than 10 nm and equal to or less than 30 nm.

The average particle diameter of 50% by volume of the particles can be adjusted by changing the structure and/or molecular weight of hydrophobic groups constituting the amphiphilic polymer, the structure and/or molecular weight of hydrophilic groups, or the like. For example, in the case where the amphiphilic polymer is the terminally branched copolymer, average particle diameter of 50% by volume of the particles can be adjusted by changing the structure of a polyolefin portion and the structure of a terminally branched portion in the terminally branched copolymer.

Incidentally, the average particle diameter of 50% by volume in the present invention refers to a diameter of the particles at 50% of the cumulative volume when the total volume is 100%, and can be measured by using a dynamic light-scattering particle diameter distribution measuring apparatus or a Microtrack particle size distribution measuring apparatus.

In addition, the shape of the particle can be observed, for example, using a transmission electron microscope (TEM) after carrying out negative staining with phosphotungstic acid.

The dispersion in the present invention is obtained by dispersing the polymer particles in water and/or a solvent, which dissolves a part of water or dissolves all of water in an arbitrary ratio.

The water is not particularly limited, and distilled water, ion exchange water, city water, water for industrial use, or the like can be used. Distilled water and ion exchange water are preferably used.

The solvent which dissolves a part of water or dissolves all of water in an arbitrary ratio is an organic solvent having affinity for water and is not particularly limited as long as the polymer particles can be dispersed therein, and examples thereof include ethylene glycol, tetraethylene glycol, isopropyl alcohol, acetone, acetonitrile, methanol, ethanol, dimethyl sulfoxide, dimethylformamide, and dimethylimidazolidinone.

Preparation of dispersion in the present invention can be carried out by a method of physically dispersing the polymer particles in water and/or a solvent which dissolves a part of water or dissolves all of water in an arbitrary ratio by a mechanical shearing force.

The dispersion method is not particularly limited, and various dispersion methods can be used. Specifically, there can be mentioned a method of dispersing the polymer particles with a high-pressure homogenizer, a high-pressure homomixer, an extrusion kneader, an autoclave, or the like in a molten state after mixing the amphiphilic polymer, water and/or a solvent which dissolves a part of water or dissolves all of water in an arbitrary ratio, and a sensor compound, a method of jet grinding at a high pressure, and a method of spraying from an aperture. Also, there can also be used a method of dispersing the terminally branched copolymer using a high-pressure homogenizer, a high-pressure homomixer, or the like by mixing water and/or a solvent which dissolves a part of water or dissolves all of water in an arbitrary ratio after dissolving the amphiphilic polymer and the sensor compound in a solvent other than water in advance. At this time, a solvent used for dissolution of the amphiphilic polymer and the sensor compound is not particularly limited as long as the amphiphilic polymer and the sensor compound are dissolved, but examples of the solvent include toluene, cyclohexane, and the aforementioned organic solvents having an affinity for water. In the case where it is not preferable that an organic solvent other than water be incorporated into the dispersion, the organic solvent can be removed by operations such as distillation or the like.

Further, for example, the dispersion can also be obtained by mixing a dispersion obtained by dispersing the amphiphilic polymer in a dispersion medium such as water with a sensor compound, heating it with stirring while applying a shearing force at a temperature of not lower than 100°C and preferably from 120°C to 200°C in an autoclave equipped with a stirrer capable of applying a shearing force to make the amphiphilic polymer into a molten state initially, and mixing the sensor compound with the amphiphilic polymer to incorporate the sensor compound into the amphiphilic polymer particles for redispersion.

When the temperature is in the above range, the amphiphilic polymer is easily dispersed because the amphiphilic polymer is in a molten state, and the amphiphilic polymer is hardly deteriorated by heating, and therefore, such a temperature range is preferable.

The time required for melting, incorporation of the sensor compound, and redispersing varies depending on the dispersion temperature or other dispersion conditions, but it is about 1 minute to 300 minutes.

The dispersion can be sufficiently carried out during the aforementioned stirring time, and the amphiphilic polymer is hardly deteriorated; therefore, such a time is preferable. After the reaction, it is preferable to maintain the state of the shearing force as applied until the temperature in the dispersion becomes not higher than 100°C and preferably not higher than 60°C.

In the case where a sensor compound having a low solubility in water is to be incorporated in the amphiphilic polymer particles, the amphiphilic polymer particles and the sensor compound extracted once by drying can also be melt-mixed in a hydrophobic solvent such as toluene, followed by removing the solvent, and then redispersing by the method described above.

In the preparation of the dispersion for use in the present invention, it is not essential to add a surfactant as described above, but, for example, an anionic surfactant, a cationic surfactant, an amphoteric surfactant, a nonionic surfactant, or the like may also be present.

Examples of the anionic surfactant include a carboxylate, a simple alkyl sulfonate, a modified alkyl sulfonate, an alkyl allyl sulfonate, an alkyl sulfate ester salt, a sulfonated oil, a sulfuric acid ester, a sulfonated fatty acid monoglyceride, a sulfonated alkanolamide, a sulfonated ether, an alkyl phosphate ester salt, an alkylbenzene phosphoric acid salt, and a naphthalenesulfonic acid-formalin condensate.

Examples of the cationic surfactant include a simple amine salt, a modified amine salt, a tetraalkyl quaternary ammonium salt, a modified trialkyl quaternary ammonium salt, a trialkylbenzyl quaternary ammonium salt, a modified trialkylbenzyl quaternary ammonium salt, an alkyl pyridinium salt, a modified alkyl pyridinium salt, an alkyl quinolinium salt, an alkyl phosphonium salt, and an alkyl sulfonium salt.

Examples of the amphoteric surfactant include betaine, sulfobetaine, and sulfate betaine.

Examples of the nonionic surfactant include a monoglycerin fatty acid ester, a polyglycol fatty acid ester, a sorbitan fatty acid ester, a sucrose fatty acid ester, a fatty acid alkanolamide, a fatty acid polyethylene glycol condensate, a fatty acid amide polyethylene glycol condensate, a fatty acid alcohol polyethylene glycol condensate, a fatty acid amine polyethylene glycol condensate, a fatty acid mercaptan polyethylene glycol condensate, an alkylphenol polyethylene glycol condensate, and a polypropylene glycol polyethylene glycol condensate.

These surfactants may be used singly or in combination of two or more kinds.

In the preparation of the dispersion for use in the present invention, a filtration step during the process may be carried out for the purpose of removing foreign materials or the like. In such a case, for example, a stainless steel filter (wire diameter: 0.035 mm, plain weave) of about 300 mesh may be arranged and pressure filtration (air pressure: 0.2 MPa) may be carried out.

The dispersion obtained according to the aforementioned method does not cause aggregation and precipitation even though the pH varies from 1 to 13 due to addition of various acids or bases, for example, acids such as hydrochloric acid, sulfuric acid, and phosphoric acid, or bases such as potassium hydroxide, sodium hydroxide, and calcium hydroxide. Furthermore, this dispersion does not cause aggregation and precipitation even in a wide temperature range such that heating and refluxing or freezing and thawing under normal pressure may be repeatedly carried out.

Meanwhile, the organic solvent having an affinity for water in the method is not particularly limited as long as the dispersoid is soluble, and examples of the organic solvent include ethylene glycol, tetraethylene glycol, isopropyl alcohol, acetone, acetonitrile, methanol, ethanol, dimethyl sulfoxide, dimethylformamide, and dimethylimidazolidinone. In the case where mixing of the organic solvent into the dispersion is not desired, the organic solvent can be removed by distillation or the like after the preparation of the dispersion containing the dispersoid.

For the dispersion in the present invention, when the terminally branched copolymer is contained in an amount of 100 parts by mass, the surfactant can be contained in an amount of 0.001 parts by mass to 20 parts by mass, preferably in an amount of 0.01 parts by mass to 10 parts by mass, and more preferably in an amount of 0.1 parts by mass to 5 parts by mass.

When the content of the surfactant is in the above range, it is preferable since physical properties of the dispersion are excellent from the practical point of view, and the dispersion hardly causes aggregation and precipitation.

Examples of the immobilization method for the sensor compound-or chromic material-containing polymer particles of the present invention include a method for dispersing the particles in a binder according to a sol-gel method (Preparation Example 1), and a method for dispersing the particles in a resin for a binder (Preparation Example 2).

### <Preparation Example 1>

Specifically, the following steps are included.
Step (a): In the presence of the sensor compound- or chromic material-containing polymer particles, a sol-gel reaction of a metal alkoxide and/or a partial hydrolysis condensate thereof is carried out.
Step (b): Preparation of a coating film.

Hereinafter, the respective steps will be described in order.

### [Step (a)]

In the step (a), specifically, the sensor compound- or chromic material-containing polymer particles (A) (hereinafter referred to as a component (A)), a metal alkoxide and/or a partial hydrolysis condensate thereof (B) (hereinafter referred to as a component (B)), and water and/or a solvent which dissolves a part of water or dissolves all of water in an arbitrary ratio (C) (hereinafter referred to as a solvent (C)) are mixed to prepare a mixed composition, while a sol-gel reaction of the component (B) is carried out. Further, in the mixed composition, a catalyst for a sol-gel reaction (D) (hereinafter referred to as a catalyst (D)) may be included for the purpose of promoting the hydrolysis/polycondensation reaction of metal alkoxides.

More specifically, the mixed composition is prepared by adding the catalyst (D), and further, if necessary, water to the component (B) or a solution obtained by dissolving the component (B) in the solvent (C) for stirring and mixing, performing a sol-gel reaction of the component (B), and adding the component (A) while continuously performing the sol-gel reaction. The component (A) can be added as an aqueous dispersion.

Incidentally, the mixed composition can also be prepared by adding an aqueous dispersion of the component (A) to the component (B) or a solution having the component (B) dissolved in the solvent (C), followed by stirring and mixing, and then adding the catalyst (D), and if necessary, water, followed by stirring and mixing.

Moreover, in order to enhance the mechanical strength, it is generally preferable to increase the proportion of the metal oxide, but when the thickness of the coating film is high, defects such as generation of cracks may occur in the process of formation of the coating film in some cases. For example, in order to form a coating film having a thickness of equal to or more than 1 µm, as the weight ratio of the component (A) to the component (B), the content of the component (B) is preferably from 10 parts by weight to 2500 parts by weight and more preferably from 10 parts by weight to 1800 parts by weight, based on 100 parts by weight of the component (A).

### [Metal Alkoxide and/or Partial Hydrolysis Condensate of Metal Alkoxide (B)]

The metal alkoxide in the present invention indicates those represented by the following formula (12).

(R¹²)x₁M(OR¹³)y₁ (12)

In the formula (12), R¹² represents a hydrogen atom, an alkyl group (a methyl group, an ethyl group, a propyl group, and the like), an aryl group (a phenyl group, a tolyl group, and the like), a carbon-carbon double bond-containing organic group (an acryloyl group, a methacryloyl group, a vinyl group, and the like), a halogen-containing group (a halogenated alkyl group such as a chloropropyl group and a fluoromethyl group), or the like; R¹³ represents a lower alkyl group having 1 to 6 carbon atoms and preferably having 1 to 4 carbon atoms; and in x₁ and y₁, x₁ + y₁ = 4 and x₁ represents an integer of equal to or less than 2.

Examples of M include Li, Na, Mg, Al, Si, K, Ca, Sc, Ti, V, Cr, Mn, Fe, Co, Ni, Cu, Zn, Rb, Sr, Y, Nb, Zr, Mo, Ag, Cd, In, Sn, Sb, Cs, Ba, La, Ta, Hf, W, Ir, Tl, Pb, Bi, and rare earth metals, and preferably used are metals (alkoxide) which become colorless metal oxides in the sol-gel reaction, such as Si, Al, Zn, Zr, In, Sn, Ti, Pb, and Hf from the viewpoint of use as a coating film. Among the metals, preferably used are silicon (Si), aluminum (Al), zirconium (Zr), titanium (Ti) and the like, or these metals may be used in combination. Among these, a silicon compound is relatively low-priced and easily obtainable, and has high industrial usefulness since the reaction slowly proceeds. Also, the component (B) may be a compound which becomes a metal oxide as described later by addition of water and a catalyst to perform the sol-gel reaction.

Specific examples include alkoxysilanes such as tetramethoxysilane (TMOS), tetraethoxysilane (TEOS), tetrapropoxysilane, tetraisopropoxysilane, methyltrimethoxysilane, methyltriethoxysilane, methyltripropoxysilane, methyltributoxysilane, ethyltrimethoxysilane, ethyltriethoxysilane, n-propyltrimethoxysilane, n-propyltriethoxysilane, isopropyltrimethoxysilane, isopropyltriethoxysilane, dimethyldimethoxysilane, dimethyldiethoxysilane, diphenyldimethoxysilane, diphenyldiethoxysilane, vinyltrimethoxysilane, vinyltriethoxysilane, phenyltrimethoxysilane, phenyltriethoxysilane, p-styryltrimethoxysilane, 3-methacryloxypropylmethyldimethoxysilane, 3-methacryloxypropylmethyldiethoxysilane, 3-methacryloxypropyltrimethoxysilane, 3-methacryloxypropyltriethoxysilane, 3-acryloxypropyltrimethoxysilane, 3-acryloxypropyltriethoxysilane, 3-chloropropyltriethoxysilane, trifluoromethyltrimethoxysilane, and trifluoromethyltriethoxysilane, and alkoxy aluminum, alkoxy zirconium, and alkoxy titanium corresponding to the alkoxysilanes.

Furthermore, in addition to these metal alkoxides, metal alkoxides having various functional groups for R¹² as shown in the following 1) to 4) can also be used.
1) Compounds having an amino group and an alkoxysilyl group, such as 3-aminopropyltrimethoxysilane, 3-aminopropyltriethoxysilane, 3-aminopropylmethyldimethoxysilane, 3-aminopropylmethyldiethoxysilane, N-2-(aminoethyl)-3-aminopropylmethyldimethoxysilane, N-2-(aminoethyl)-3-aminopropyltrimethoxysilane, 2-aminoethylaminomethyltrimethoxysilane, 3-aminopropyldimethylethoxysilane, 2-(2-aminoethylthioethyl)triethoxysilane, p-aminophenyltrimethoxysilane, N-phenyl-3-aminopropylmethyldimethoxysilane, N-phenyl-3-aminopropylmethyldiethoxysilane, N-phenyl-3-aminopropyltrimethoxysilane, and N-phenyl-3-aminopropyltriethoxysilane.
2) Compounds having a glycidyl group and an alkoxysilyl group, such as 3-glycidoxypropylpropyltrimethoxysilane, 3-glycidoxypropylpropyltriethoxysilane, and 3-glycidoxypropylmethyldiethoxysilane.
3) Compounds having a thiol group and an alkoxysilyl group such as 3-mercaptopropylmethyldimethoxysilane and 3-mercaptopropyltrimethoxysilane.
4) Compounds having a ureide group and an alkoxysilyl group such as 3-ureidepropyltrimethoxysilane.

In the present invention, as the metal alkoxide, in the above formula (12), preferred are an alkoxysilane in which M is silicon (Si), alkoxy zirconium in which M is zirconium (Zr), alkoxy aluminum in which M is aluminum (Al), and alkoxy titanium in which M is titanium (Ti).

The partial hydrolysis condensate of metal alkoxide is a compound obtained by partial hydrolysis of one or more of these metal alkoxides using the catalyst (D), and then polycondensation of the resulting hydrolyzate. The partial hydrolysis condensate of metal alkoxide is for example, a partial hydrolysis polycondensation compound of metal alkoxide.

In the present invention, as the partial hydrolysis condensate of metal alkoxide, preferred are a condensate of alkoxysilane, a condensate of alkoxy zirconium, a condensate of alkoxy aluminum, and a condensate of alkoxy titanium.

### [Water and/or Solvent which dissolves a part of water or dissolves all of water in an arbitrary ratio (C)]

In the mixed composition of the present invention, the solvent (C) is added for the purpose of further hydrolysis of the component (B).

Incidentally, the solvent (C) encompasses both a solvent to be used to obtain an aqueous dispersion by using the terminally branched copolymer, and a solvent to be used in the case of mixing the aqueous dispersion, the component (B), and a catalyst (D) as described later.

The water is not particularly limited, and distilled water, ion exchange water, city water, water for industrial use, or the like can be used, distilled water or ion exchange water is preferably used.

The solvent which dissolves a part of water or dissolves all of water in an arbitrary ratio is an organic solvent having an affinity for water, and is not particularly limited as long as a terminally branched copolymer can be dispersed in the solvent. Examples of the solvent include methanol, ethanol, propyl alcohol, isopropyl alcohol, acetone, acetonitrile, dimethylsulfoxide, dimethylformamide, dimethylimidazolidinone, ethylene glycol, tetraethylene glycol, dimethylacetamide, N-methyl-2-pyrrolidone, tetrahydrofuran, dioxane, methyl ethyl ketone, cyclohexanone, cyclopentanone, 2-methoxyethanol(methyl cellosolve), 2-ethoxyethanol(ethyl cellosolve), and ethyl acetate. Among these, preferred are methanol, ethanol, propyl alcohol, isopropyl alcohol, acetonitrile, dimethyl sulfoxide, dimethylformamide, acetone, tetrahydrofuran, and dioxane since these have a high affinity for water.

Further, at the time of hydrolysis polycondensation of metal alkoxides, the reaction temperature is preferably equal to or higher than 1°C and equal to or lower than 100°C, and more preferably equal to or higher than 20°C and equal to or lower than 60°C, while the reaction time is preferably equal to or more than 10 minutes and equal to or less than 72 hours, and more preferably equal to or more than 1 hour and equal to or less than 24 hours.

### [Catalyst for Sol-Gel Reaction (D)]

The mixed composition for use in the present invention may contain a material as shown below, which can act as a catalyst for the hydrolysis polycondensation reaction, for the purpose of promoting the reaction in a hydrolysis polycondensation reaction of metal alkoxide.

Those used as the catalyst for the hydrolysis polycondensation reaction of metal alkoxide are the catalysts used in general sol-gel reactions, which are described in "Recent Technology for Functional Thin Film Production According to Sol-Gel Method" (Hirashima, Hiroshi, Comprehensive Technology Center Co., Ltd., p. 29), "Science of Sol-Gel Method" (Sakka, Sumio, Agne Shofu, p. 154), or the like.

Examples of the catalyst (D) include an acid catalyst, an alkali catalyst, an organic tin compound, and metal alkoxides such as titanium tetraisopropoxide, diisopropoxytitanium bis(acetylacetonate), zirconium tetrabutoxide, zirconium tetrakis(acetylacetonate), aluminum triisopropoxide, aluminum trisethylacetonate, and trimethoxyborane.

Among these catalysts, an acid catalyst and an alkali catalyst are preferably used. Specific examples of the acid catalyst include inorganic and organic acids such as hydrochloric acid, nitric acid, sulfuric acid, phosphoric acid, acetic acid, oxalic acid, tartaric acid, and toluenesulfonic acid. Examples of the alkali catalyst include ammonium hydroxide; alkali metal hydroxides such as potassium hydroxide and sodium hydroxide; quaternary ammonium hydroxides such as tetramethylammonium hydroxide, tetraethylammonium hydroxide, and tetrabutylammonium hydroxide; ammonia; amines such as triethylamine, tributylamine, morpholine, pyridine, piperidine, ethylenediamine, diethylenetriamine, ethanolamine, diethanolamine, and triethanolamine; and aminosilanes such as 3-aminopropyltriethoxysilane, and N(2-aminoethyl)-3-aminopropyltrimethoxysilane.

From the viewpoint of the reactivity, it is preferable to use acid catalysts such as hydrochloric acid and nitric acid, with which the reaction proceeds relatively mildly. The amount of the catalyst to be used is preferably equal to or more than about 0.001 moles and equal to or less than about 0.05 moles, more preferably equal to or more than about 0.001 moles and equal to or less than about 0. 04 moles, and still more preferably equal to or more than about 0.001 moles and equal to or less than about 0.03 moles, with respect to 1 mole of the metal alkoxide of the component (B).

The mixed composition may be used, for example, in the form of a sol-gel product obtained by a sol-gel reaction without removing the solvent (C) in the presence of the catalyst (D).

### [Step (b)]

In the step (b), an organic/inorganic composite such as a coating film is obtained by coating and drying the reaction solution (mixed composition) obtained in the step (a).

The organic/inorganic composite containing polymer particles and metal oxides can be obtained, for example, in the form of a sol-gel product obtained by coating the reaction solution (mixed composition) to a base material, then heating the resultant for a predetermined time to remove the solvent (C), and completing the sol-gel reaction. Alternatively, it can also be obtained in the form of a sol-gel product obtained by coating a sol-gel intermadiate obtained by the sol-gel reaction without removing the solvent (C) to a base material, then heating the resultant for a predetermined time to remove the solvent (C), and completing the sol-gel reaction in the mixed composition.

Incidentally, the state of the completion of the sol-gel reaction means ideally the state of all components forming an M-O-M bond, but includes the state shifted to a solid (gel) state even though some alkoxyl groups (M-OR²) or M-OH groups remain.

That is, the metal oxide can be obtained from the component (B) by completion of the sol-gel reaction by heat-drying the mixed composition (reaction solution) to form a matrix mainly composed of this metal oxide. The coating film has a structure in which sensor compound- or chromic material-containing polymer particles (A) are dispersed in the matrix.

The metal oxide in the sol-gel product is a continuous matrix structure in the organic/inorganic composite. The metal oxide is not particularly limited as described above, but the metal oxide as a coating film is preferably a continuous matrix structure in view of improvement of mechanical properties and the like. Such a structure of the metal oxide is obtained by subj ecting a metal alkoxide to hydrolysis and polycondensation, that is, a sol-gel reaction.

As a method for preparing a composite of porous support and a film, a method of dipping the porous support in the mixed composition of the present invention and drying the porous support while maintaining it at a predetermined temperature can be exemplified.

Examples of the porous support for use in the present invention include porous materials of ceramics such as silica, alumina, zirconia, and titania; metals such as stainless steel and aluminum; and paper and resin.

The heating temperature for completing the sol-gel reaction is equal to or higher than room temperature and equal to or lower than 300°C, and more preferably equal to or higher than 80°C and equal to or lower than 200°C. The reaction time is equal to or more than 10 minutes and equal to or less than 72 hours, and more preferably equal to or more than 1 hour and equal to or less than 24 hours.

### <Preparation Example 2>

Preparation Example 2 is an example in which the sensor compound-or chromic material-containing polymer particles (A) are dispersed in a resin for a binder. The dispersing method is not particularly limited, but examples of the method include a method in which an aqueous dispersion of the sensor compound- or chromic material-containing polymer particles (A) is mixed with an aqueous solution of a water-soluble binder resin or an aqueous dispersion (emulsion) of film-forming binder resin particles, followed by heating and drying; and a method in which an aqueous dispersion of the sensor compound- or chromic material-containing polymer particles (A) is recovered as powder by volatizing moisture from the particles using a method of freeze-drying, spray-drying, or the like, then redispersed in a binder resin (varnish) dissolved in an organic solvent or a binder resin precursor monomer, followed by heating and drying, and if necessary, subjected to a curing treatment.

Hereinafter, the resin for a binder will be described.

The resin for a binder for use in the present embodiment is not particularly limited. For example, examples of the resin include a thermosetting resin that cures by heating, a photocurable resin that cures by irradiation with light such as ultraviolet rays, a thermoplastic resin, and a water-soluble resin. Among these, preferred are film-forming polyolefin-based, poly (meth) acrylic acid ester-based, polystyrene-based, polyurethane-based, polyvinyl alcohol-based, and polyvinylacetal-based polymers.

Examples of the thermosetting resin and the photocurable resin include an epoxy resin, an unsaturated polyester resin, a phenol resin, a urea-melamine resin, a polyurethane resin, a polythiourethane resin, a silicone resin, a diallyl phthalate resin, an allyl diglycol carbonate resin, and a thermosetting polyimide resin.

Examples of the epoxy resin include various types of epoxy resins, for example, glycidyl ether type epoxy resins such as a bisphenol A type epoxy resin, a glycidyl ester type epoxy resin, a glycidyl amine type epoxy resin, a cyclic aliphatic type epoxy resin, a novolac type epoxy resin, a naphthalene type epoxy resin, and a dicyclopentadiene type epoxy resin. Examples of the unsaturated polyester resin include an orthophthalic acid-based polyester resin, an isophthalic acid-based polyester resin, a terephthalic acid-based polyester resin, an alicyclic unsaturated acid-based polyester resin, a fatty saturated polyester resin, a bisphenol-based polyester resin, a halogen-containing acid-based polyester resin, and a halogen-containing bisphenol-based polyester resins. Examples of the phenol resin include phenol resins such as resol type resin and a novolac type resin.

Examples of the thermoplastic resin include a polyolefin resin, a polyvinyl chloride resin, a vinylidene chloride-based resin, a polystyrene resin, an acrylonitrile/butadiene/styrene copolymer resin, an acrylonitrile/styrene copolymer resin, a styrene-based block copolymer resin, a methacrylic resin, a polyvinyl alcohol resin (PVA), a polyvinyl acetal resin (PVB), a polyacetal resin, a polyamide resin, a polycarbonate resin, a modified polyphenyleneether resin, a thermoplastic polyester resin, a fluorine resin, a polyphenylenesulfide resin, a polysulfone resin, an amorphous arylate resin, a polyetherimide resin, a polyethersulfone resin, a polyetherketone resin, a liquid crystal polymer resin, a polyamidimide resin, a thermoplastic polyimide resin, and a syndiotactic polystyrene resin.

Examples of the polyolefin resin include a polyethylene resin, a polypropylene resin, an α-olefin copolymer resin, a polybutene-1 resin, a polymethylpentene resin, a cyclic olefin-based polymer resin, an ethylene/vinyl acetate copolymer resin, an ethylene/methacrylic acid copolymer resin, and an ionomer.

Examples of the polyamide resin include Nylon 6, Nylon 66, Nylon 11, and Nylon 12.

Examples of the thermoplastic polyester resin include a polyethylene terephthalate resin, a polybutylene terephthalate resin, a polybutylenesuccinate resin, and a polylactic acid resin.

Examples of the fluorine resin include a polytetrafluoroethylene resin, a perfluoroalkoxyalkane resin, a perfluoroethylenepropene copolymer resin, an ethylene/tetrafluoroethylene copolymer resin, a polyvinylidene fluoride resin, a polychlorotrifluoroethylene resin, an ethylene/chlorotrifluoroethylene copolymer resin, a tetrafluoroethylene/perfluorodioxole copolymer resin, and a polyvinyl fluoride resin.

Examples of the water-soluble resin include polyvinyl alcohol (PVA), polyvinylpyrrolidone (PVP), polyethylene glycol (PEG), and derivatives thereof.

As the film-forming polyolefin-based, poly(meth)acrylic acid ester-based, polystyrene-based, or polyurethane-based resin (aqueous emulsion), preferred are polymer particles having particle diameters of 10 µm to 300 µm, which form a transparent coating film by drying and then heating at room temperature to equal to or lower than 100°C.

The weight ratio of the sensor compound- or chromic material-containing polymer particles (A) to the resin for a binder is not particularly limited, but the ratio of the resin for a binder is preferably from 10 parts by weight to 2500 parts by weight, and more preferably from 10 parts by weight to 1800 parts by weight, with respect to 100 parts by weight of (A).

As a method for preparing a resin plate, a film, or a coating film, dip coating, spin coating, spray coating, flow-down type coating, blade coating, bar coating, die coating, or other appropriate methods may be used depending on an intended use, and the kind, shape, or the like of a substrate. As the substrate, porous supports can be used, in addition to molded products such as metals, glass, ceramics, and polymers, sheets, films, or the like.

### <Uses>

The polymer particles, the aqueous dispersion thereof, the mixed composition thereof or the organic/inorganic composite thereof in the present invention can be used as sensors such as a temperature sensor, a pressure sensor, an oxygen sensor, a metal sensor, a pH sensor, or the like, an optical fiber type temperature detecting element, a temperature-sensitive paint, a temperature-sensitive film, an intracellular temperature measuring probe, or a bio-imaging fluorescent probe. Further, the polymer particles can be suitably used as a temperature detecting component, oxygen detecting component or an ion concentration detecting component in a wide range of the medical, semiconductors, food, aviation, marine, and automotives field. Further, the polymer particles can be suitably used for chromic articles such as photochromic spectacle lenses, light modulating materials, display materials, ink materials, optical recording materials, and optical switches, in particular, photochromic optical articles.

It is believed that in the present invention, by incorporating a fluorescent material as a sensor compound into the above-described amphiphilic polymer particles having a small average particle diameter of 50% by volume, the dispersion characteristics become uniform. Further, surprisingly, even when the sensor compound is contained in the amphiphilic polymer, a correlation between a change in a specific environmental factor (for example, a change in the temperature) and fluorescent characteristics (for example, a fluorescence intensity) can be seen, and the correlation is hardly affected by a change in other factors (for example, pH and ion intensity). In addition, the reversibility of the fluorescent characteristics is also good.

Accordingly, the sensor compound-containing polymer particles of the present invention can be applied in an element for detecting temperature even in a microscopic region with high accuracy as described above, a bio-imaging fluorescent probe which is stable in an aqueous environment, various sensors (for pressure, oxygen, metals, pH, or the like), etc.

Furthermore, by incorporating a photochromic dye into the above-described amphiphilic polymer particles having a small average particle diameter of 50% by volume, the dispersibility in a matrix resin is improved, and the susceptibility to chemical or physical effects from a matrix resin is reduced, and as a result, a change in the chemical structure by irradiation with light, and the reversibility of a change in the absorption characteristics due to the change in the chemical structure become extremely better.

Accordingly, various chromic materials of the present invention (a photochromic material, a thermochromic material, and the like) can be applied in spectacle lenses, light modulating materials, display materials, ink materials, optical recording materials, optical switches, or sensor materials.

The embodiments of the present invention are described above, but are only illustrative of the present invention, and various configurations other than those described above may be employed.

### [Examples]

Hereinafter, the present invention will be described in more detail with reference to Examples, but the scope of the present invention is not intended to be limited to these Examples and the like.

### <Synthesis Examples of Terminally Branched Copolymer>

The number average molecular weight (Mn), the weight average molecular weight (Mw), and the molecular weight distribution (Mw/Mn) were measured using GPC according to the method as described herein. Further, for the melting point (Tm), the peak top temperature obtained by measuring with differential scanning calorimetry (DSC) was employed. Incidentally, the melting point of the polyalkylene glycol portion is also confirmed under the measurement conditions, but it indicates the melting point of the polyolefin portion unless otherwise particularly noted. The measurement by ¹H-NMR was carried out at 120°C after completely dissolving the polymer in deuterated-1,1,2,2-tetrachloroethane, which functioned both as the lock solvent and the solvent, in a sample tube for measurement. For a chemical shift, the peak of deuterated-1,1,2,2-tetrachloroethane was set at 5.92 ppm, and the chemical shift values of other peaks were determined. For the particle diameter of the particles in the dispersion, the average particle diameter of 50% by volume was measured with a Microtrack UPA (manufactured by Honeywell, Inc.). The shape of the particles in the dispersion was observed under the condition of 100 kV with a transmission electron microscope (TEM/H-7650, manufactured by Hitachi, Ltd.), after diluting the sample by 200 times to 500 times and performing negative staining with phosphotungstic acid.

### [Synthesis Example 1]

### (Synthesis of Terminally Branched Copolymer (T))

In accordance with the following procedure (for Example, Refer to Synthesis Example 2 of Japanese Unexamined Patent Publication No. 2006-131870), a terminal epoxy group-containing ethylene polymer (E) was synthesized.

1000 ml of heptane was charged to a 2000 ml stainless steel autoclave sufficiently purged with nitrogen at room temperature, followed by heating to 150°C. Subsequently, the autoclave was pressurized with ethylene to 30 kg/cm²G while maintaining the temperature. 0.5 ml (0.5 mmol) of a hexane solution (1.00 mmol/ml in terms of aluminum) of MMAO (manufactured by Tosoh Finechem Corporation) was fed thereinto with pressure, and then 0. 5 ml (0.0001 mmol) of a toluene solution (0.0002 mmol/ml) of a compound of the following general formula (13) was fed thereinto with pressure to initiate polymerization. Under an ethylene gas atmosphere, polymerization was carried out at 150°C for 30 minutes, and then the polymerization was terminated by feeding a small amount of methanol with pressure. The obtained polymer solution was added to 3 liters of methanol containing a small amount of hydrochloric acid to precipitate the polymer. The polymer was washed with methanol and then dried at 80°C for 10 hours under reduced pressure, whereby an ethylenic polymer (P) containing a double bond at one terminal was obtained.

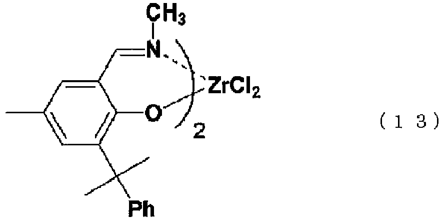

100 g of the ethylenic polymer (P) containing a double bond at one terminal (Mn: 850, vinyl group: 108 mmol), 300 g of toluene, 0.85 g (2.6 mmol) of Na₂WO₄, 0.60 g (1.3 mmol) of CH₃(nC₈H₁₇)₃NHSO₄, and 0.11 g (1. 3 mmol) of phosphoric acid were added to a 500 ml separable flask, followed by heating under reflux for 30 minutes with stirring, whereby the polymer was completely melted. The internal temperature was set to 90°C and then 37 g (326 mmol) of 30% aqueous hydrogen peroxide was added dropwise over 3 hours, followed by stirring at the internal temperature of 90°C to 92°C for 3 hours. Thereafter, 34.4 g (54.4 mmol) of a 25% aqueous sodium thiosulfate solution was added thereto, followed by stirring for 30 minutes while maintaining the temperature at 90°C, and it was confirmed that peroxide in the reaction system was completely decomposed with a peroxide test strip. Subsequently, 200 g of dioxane was added thereto at the internal temperature of 90°C to crystallize the product, and the solids were collected by filtration and washed with dioxane. The obtained solids were stirred into a 50% aqueous methanol solution at room temperature, and the solids were collected by filtration and washed with methanol. Further, the solids were stirred into 400 g of methanol, collected by filtration, and washed with methanol. The solids were dried at room temperature under reduced pressure of 1 hPa to 2 hPa to obtain 96. 3 g of a white solid of the terminal epoxy group-containing ethylene polymer (E) (yield: 99%, conversion rate of olefin: 100%).

The obtained terminal epoxy group-containing ethylene polymer (E) had Mw = 2058, Mn = 1118, and Mw/Mn = 1.84 (GPC) (terminal epoxy group content: 90% by mole, ¹H-NMR: δ (C₂D₂Cl₄) 0.88 (t, 3H, J = 6.92 Hz), 1.18 - 1.66 (m), 2.38 (dd, 1H, J = 2.64, 5.28 Hz), 2.66 (dd, 1H, J=4.29, 5.28 Hz), 2.80-2.87 (m, 1H), melting point (Tm) 121°C).

84 parts by weight of the terminal epoxy group-containing ethylene polymer (E), 39.4 parts by weight of diethanolamine, and 150 parts by weight of toluene were introduced into a 1000 mL flask, followed by stirring at 150°C for 4 hours. Thereafter, acetone was added thereto while cooling the mixture to precipitate the reaction product, and the solids were collected by filtration. The obtained solids were stirred and washed with an aqueous acetone solution one time and further with acetone three times, and then the solids were collected by filtration. Thereafter, the solids were dried at room temperature under reduced pressure to obtain a polymer (I) (Mn = 1223, in the general formula (9), A: a group formed by polymerization of ethylene (Mn: 1075), R¹ = R² = a hydrogen atom, one of Y¹ and Y²: a hydroxyl group, the other of Y¹ and Y²: a bis(2-hydroxyethyl)amino group) (¹H-NMR: δ (C₂D₂Cl₄) 0.88 (t, 3H, J = 6.6 Hz), 0.95-1.92 (m), 2.38-2.85 (m, 6H), 3.54-3.71 (m, 5H), melting point (Tm) 121°C).

20.0 parts by weight of the polymer (I) and 100 parts by weight of toluene were introduced into a 500 mL flask equipped with a nitrogen inlet tube, a thermometer, a condenser tube, and a stirring device, followed by heating in an oil bath at 125°C with stirring to dissolve the solids completely. After cooling to 90 °C, 0.323 parts by weight of 85% KOH that had been dissolved in 5.0 parts by weight of water in advance was added to the flask, and the contents were mixed under reflux condition for 2 hours. Subsequently, the temperature in the flask was slowly increased to 120°C, and water and toluene were distilled off. Water and toluene in the flask were further distilled off by reducing the pressure in the flask while supplying minimal nitrogen into the flask, increasing the internal temperature to 150°C, and then maintaining the temperature for 4 hours. After cooling to room temperature, the solids solidified in the flask were broken and taken out.

18.0 parts by weight of the obtained solids and 200 parts by weight of dehydrated toluene were introduced into a 1.5-L stainless steel pressurized reactor equipped with a heating device, a stirring device, a thermometer, a manometer, and a safety valve, and after purging the gas phase with nitrogen, the system was heated to 130°C with stirring. After 30 minutes, 18.0 parts by weight of ethylene oxide was added thereto, and after further maintaining at 130°C for 5 hours, the contents were cooled to room temperature to obtain a product. The solvent was removed by drying the obtained product to obtain a polyolefin-based terminally branched copolymer (T) (Mn: 2446, in the general formula (1), A: a group formed by polymerization of ethylene (Mn: 1075), R¹ = R² = a hydrogen atom, one of X¹ and X²: a group represented by the general formula (6) (X¹¹ = a polyethylene glycol group), the other of X¹ and X²: a group represented by the general formula (5) (Q¹ = Q² = an ethylene group, and X⁹ = X¹⁰ = a polyethylene glycol group)) (¹H-NMR: δ (C₂D₂Cl₄) 0.88 (3H, t, J = 6.8 Hz), 1.06-1.50 (m), 2.80 - 3.20 (m), 3.33 - 3.72 (m), melting point (Tm) 27°C (polyethylene glycol), 118°C).

### [Example 1]

### (Preparation of Aqueous Dispersion Containing Temperature-Sensitive Fluorescent Dye-Containing Copolymer Particles - 1)

10 parts by weight of the polyolefin-based terminally branched copolymer (T) obtained in the synthesis above, and each of 0.1 parts by weight, 1 part by weight, 2 parts by weight, 3 parts by weight, and 5 parts by weight of tris(thenoyltrifluoroacetonate)europium (III) (Eu (III)(TTA)₃) that is a temperature-sensitive fluorescent dye (Examples 1-1 to Example 1-5), and 40 parts by weight of distilled water were charged into a 100 ml autoclave, followed by heating with stirring at a rate of 800 rpm at 135°C for 30 minutes, and then cooling to room temperature while keeping stirring. The average particle diameter of 50% by volume of the obtained dispersion system was 0.018 µm (average particle diameter of 10% by volume: 0.014 µm, average particle diameter of 90% by volume: 0.022 µm). The particle diameter measured from the results of the observation of the obtained dispersion system with a transmission electron microscope was 0.015 µm to 0.030 µm. The respective composition ratios are listed in Table 1.

### [Example 2]

### (Preparation of Aqueous Dispersion Containing Temperature-Sensitive Fluorescent Dye/Non-Temperature-Sensitive Fluorescent Dye-Containing Copolymer Particles - 2)

By the same method as above except that each of 0.1 parts by weight, 1 part by weight, 2 parts by weight, 3 parts by weight, and 5 parts by weight of tris(thenoyltrifluoroacetonate)europium (III) (Eu (III)(TTA)₃) that is a temperature-sensitive fluorescent dye (Examples 2-1 to 2-5), and 0.01 parts by weight of fluorescein isothiocyanate (FITC) that is a non-temperature-sensitive fluorescent dye were added, an aqueous dispersion of a Eu-TTA/FITC-containing polyolefin-based terminally branched copolymer was obtained. The respective composition ratios are listed in Table 1.

### [Comparative Example 1]

### (Preparation of Aqueous Dispersion Containing Temperature-Sensitive Fluorescent Dye - 1)

Each of 0.1 parts by weight, 1 part by weight, 2 parts by weight, 3 parts by weight, and 5 parts by weight of tris(thenoyltrifluoroacetonate)europium (III) (Eu (III)(TTA)₃) that is a temperature-sensitive fluorescent dye (Comparative Examples 1-1 to 1-5), and 40 parts by weight of distilled water were charged into a 10-ml autoclave, followed by heating with stirring at a rate of 800 rpm at 135°C for 30 minutes, an aqueous solution of Eu-TTA was prepared. The respective composition ratios are listed in Table 1.

### [Comparative Example 2]

### (Preparation of Aqueous Dispersion Containing Temperature-Sensitive Fluorescent Dye/Non-Temperature-Sensitive Fluorescent Dye - 2)

By the same method as above except that each of 0.1 parts by weight, 1 part by weight, 2 parts by weight, 3 parts by weight, and 5 parts by weight of tris(thenoyltrifluoroacetonate)europium (III) (Eu (III)(TTA)₃) that is a temperature-sensitive fluorescent dye (Comparative Examples 2-1 to 2-5), and 0.01 parts by weight of fluorescein isothiocyanate (FITC) that is a non-temperature-sensitive fluorescent dye were added, an aqueous solution containing Eu-TTA/FITC was prepared. The respective composition ratios are listed in Table 1.

Using the aqueous dispersions obtained in Examples 1 to 2, and Comparative Examples 1 to 2, the following evaluation was carried out. The results are listed in Table 1. The unit is part(s) by weight.

### (1) Water-Dispersion Stability

The aqueous dispersion was left to stand and the dispersion stability of a fluorescent dye in water was investigated according to the following criteria.
A: The fluorescent dye is completely dissolved and turbidity or the like is not seen.
B: After the passage of 24 hours, a precipitate of the fluorescent dye is observed.
C: The fluorescent dye is not completely dissolved and a precipitate is seen.

**[Table 1]**

| | | Polyolefin-based terminally branched copolymer (T) | Eu-TTA | FITC | Distilled water | Dispersion stability of fluorescent dye |
|---|---|---|---|---|---|---|
| Example 1 | 1 | 10 | 0.1 | - | 40 | A |
| | 2 | 10 | 1 | - | 40 | A |
| | 3 | 10 | 2 | - | 40 | A |
| | 4 | 10 | 3 | - | 40 | A |
| | 5 | 10 | 5 | - | 40 | A |
| Example 2 | 1 | 10 | 0.1 | 0.01 | 40 | A |
| | 2 | 10 | 1 | 0.01 | 40 | A |
| | 3 | 10 | 2 | 0.01 | 40 | A |
| | 4 | 10 | 3 | 0.01 | 40 | A |
| | 5 | 10 | 5 | 0.01 | 40 | A |
| Comparative Example 1 | 1 | | 0.1 | - | 40 | B |
| | 2 | | 1 | - | 40 | B |
| | 3 | | 2 | - | 40 | C |
| | 4 | | 3 | - | 40 | C |
| | 5 | | 5 | - | 40 | C |
| Comparative Example 2 | 1 | | 0.1 | 0.01 | 40 | C |
| | 2 | | 1 | 0.01 | 40 | C |
| | 3 | | 2 | 0.01 | 40 | C |
| | 4 | | 3 | 0.01 | 40 | C |
| | 5 | | 5 | 0.01 | 40 | C |

Using the aqueous dispersion containing the temperature-sensitive fluorescent dye-containing copolymer particles obtained in Example 1, and the aqueous dispersion containing temperature-sensitive fluorescent dye/non-temperature-sensitive fluorescent dye-containing copolymer particles obtained in Example 2, the following fluorescent characteristics were evaluated.

### (2-1) Percentage of change in Fluorescence Intensity

A percentage of change in the fluorescence intensity at a peak wavelength (614 nm) of the fluorescence of Eu (III)(TTA)₃ observed at an excitation wavelength 396 nm was determined using a fluorescent spectrophotometer "F-2700 (manufactured by Hitachi High-Technologies Corporation) " while changing the temperature from 15°C to 60°C.

As a result, in all the composition ratios, a percentage of change of equal to or more than 2%/°C was obtained.

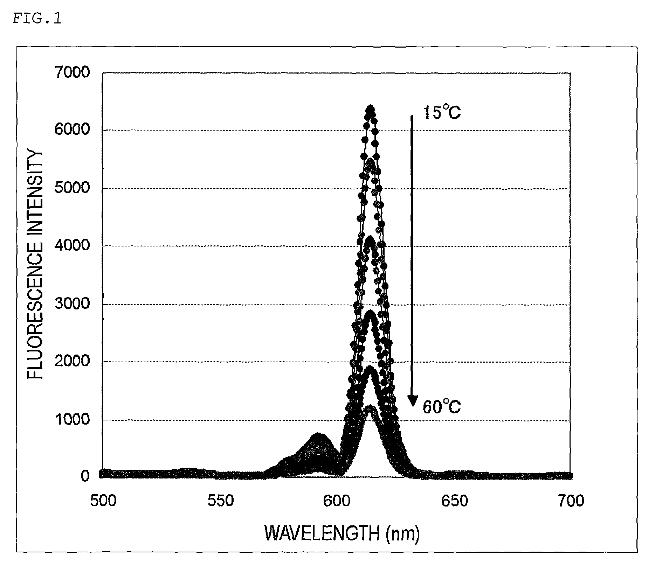

FIG. 1 shows a change in the fluorescence intensity of Eu (III) (TTA)₃ with temperature, as observed at an excitation wavelength of 396 nm, of the aqueous dispersion containing the temperature-sensitive fluorescent dye-containing copolymer particles obtained in Example 2-1. FIG. 1 shows the fluorescent spectra in descending order of the fluorescence intensity, respectively obtained at 15°C, 20°C, 30°C, 40°C, 50°C, and 60°C.

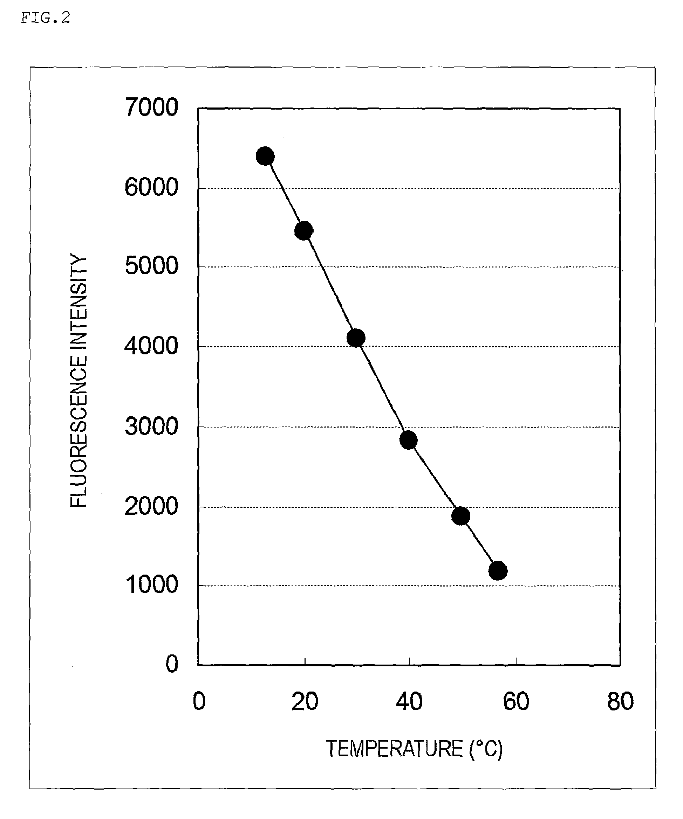

FIG. 2 shows a percentage of change in the fluorescence intensity observed at a peak wavelength (614 nm) for Eu (III)(TTA)₃ at each temperature, using an excitation wavelength of 396 nm, of the aqueous dispersion containing the temperature-sensitive fluorescent dye-containing copolymer particles obtained in Example 2-1.

For the aqueous dispersion containing temperature-sensitive fluorescent dye/non-temperature-sensitive fluorescent dye-containing copolymer particles obtained in Example 2, the fluorescence intensity at a peak wavelength (520 nm) of the fluorescence of FITC, as observed at an excitation wavelength of 495 nm was investigated, and as a result, a change in fluorescence intensity was not seen.

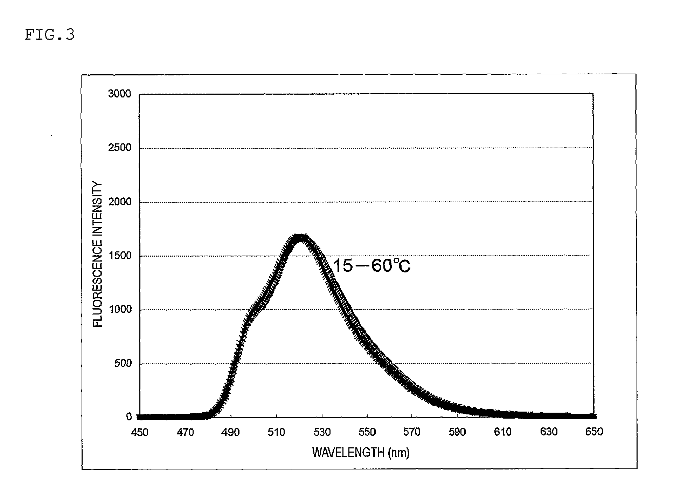

FIG. 3 shows a change in the fluorescence intensity of FITC in temperatures (15°C, 20°C, 30°C, 40°C, 50°C, and 60°C), as observed at an excitation wavelength of 495 nm, of the aqueous dispersion containing the temperature-sensitive fluorescent dye/non-temperature-sensitive fluorescent dye-containing copolymer particles obtained in Example 2-1.

### (2-2) Change Reversibility in Fluorescence Intensity

The change and reversibility in the fluorescence intensity of Eu (III)(TTA)₃ were evaluated by varying the temperature from 25°C to 40°C, and then from 40°C to 25°C repeatedly ten times. In all composition ratios, the fluorescence intensity was changed reversibly with a decrease or increase in the temperature, and was stable even with repeated warming and cooling ten times or more.

### (2-3) pH Stability

A phosphate buffer solution with a pH of 4 to 10 was prepared and the fluorescence intensity of Eu (III)(TTA)₃ at each pH was measured. In all composition ratios, the fluorescence intensity at 614 nm showed a constant value.

### (2-4) Ion Intensity Stability

Phosphate buffer solutions at pH 7 containing 0 mM to 500 mM KCl were prepared, and the fluorescence intensity of Eu (III)(TTA)₃ at each ion intensity was measured. Under any of the conditions, the fluorescence intensity at 614 nm showed a constant value.

### [Example 3]

### (Immobilization of Temperature-Sensitive Fluorescent Dye - 1)

To 10 parts by weight of tetramethoxysilane (TMOS) was added 15 parts by weight of methanol, followed by stirring at room temperature. 2.6 parts by weight of a 1 M aqueous oxalic acid solution was further added dropwise thereto, followed by stirring at room temperature for 30 minutes, to obtain a dehydrated condensate of TMOS. Further, 42.9 parts by weight of an aqueous dispersion (solid content of 24.5% by weight) obtained in Examples 1 containing 10 parts by weight of the polyolefin-based terminally branched copolymer (T) and 3 parts by weight of tris(thenoyltrifluoroacetonate)europium (III) (Eu (III) (TTA)₃) that is a temperature-sensitive fluorescent dye was added dropwise thereto, followed by stirring at room temperature, to prepare a polyolefin-based terminally branched copolymer/Eu (III) (TTA)₃/TMOS dehydrated condensate solution (weight ratio of the polyolefin-based terminally branched copolymer/Eu (III)(TTA)₃/silica: in terms of SiO₂ is 54.4/16.3/29.3).

### [Example 4]

### (Immobilization of Temperature-Sensitive Fluorescent Dye - 2)

To 10 parts by weight of tetramethoxysilane (TMOS) was added 15 parts by weight of methanol, followed by stirring at room temperature. 2.6 parts by weight of a 1 M aqueous oxalic acid solution was added dropwise thereto, followed by stirring at room temperature for 30 minutes, to obtain a dehydrated condensate of TMOS. Further, 42.9 parts by weight of an aqueous dispersion (solid content of 24.5% by weight) obtained in Example 2 containing 10 parts by weight of the polyolefin-based terminally branched copolymer (T), 3 parts by weight of tris(thenoyltrifluoroacetonate)europium (III) (Eu (III)(TTA)₃) that is a temperature-sensitive fluorescent dye, and 0.01 parts by weight of a fluorescein isothiocyanate (FITC) that is a non-temperature-sensitive fluorescent dye was added dropwise thereto, followed by stirring at room temperature, to prepare a polyolefin-based terminally branched copolymer/Eu (III)(TTA)₃/FITC/TMOS dehydrated condensate solution (weight ratio of the polyolefin-based terminally branched copolymer/Eu (III)(TTA)₃/FITC/silica: in terms ofSiO₂ is 54.4/16.3/0.05/19.3).

### [Comparative Example 3]

### (Immobilization of Temperature-Sensitive Fluorescent Dye - 3)

To 10 parts by weight of polymethylmethacrylate (PMMA) that is a hydrophobic polymer was added 30 parts by weight of acetone, followed by dissolution. 3 parts by weight of Eu (III)(TTA)₃ was dissolved in acetone and mixed with a PMMA solution in acetone to prepare a solution of PMMA/Eu (III)(TTA)₃.

### [Comparative Example 4]

### (Immobilization of Temperature-Sensitive Fluorescent Dye - 4)

To 10 parts by weight of PMMA was added 30 parts by weight of acetone, followed by dissolution. 3 parts by weight of Eu (III)(TTA)₃ and 0.01 parts by weight of FITC were dissolved in acetone and mixed with the PMMA solution in acetone to prepare a solution of PMMA/FITC/Eu (III)(TTA)₃.

The solutions obtained in Examples 3 to 4 and Comparative Examples 3 to 4 were spin-coated on quartz glass under the conditions of 2000 rpm × 10 sec, and dried in a hot air dryer at 100°C for 30 minutes to obtain a thin film.

The obtained thin film was evaluated as follows.

### (3) Peeling

An ordinary cross-cut tape peeling test was carried out. As a result, in the thin films obtained in Examples 3 to 4, peeling was not observed at all, but the thin films obtained in Comparative Examples 3 to 4 were completely peeled.

### (4) Fluorescence Intensity

The thin films obtained in Examples 3 to 4 and Comparative Examples 3 to 4 were irradiated by a UV irradiation device (365 nm) in a dark place, and the light emission intensity was observed visually. As a result, red fluorescence corresponding to the peak wavelength (614 nm) of the fluorescence of Eu (III)(TTA)₃ was observed, but it was clearly found that the fluorescence intensity of Comparative Examples 3 to 4 was weak, as compared with Examples 3 to 4. It was assumed that the fluorescent dyes mixed with PMMA of Comparative Examples 3 to 4 aggregated to cause concentration quenching. Using a fluorescence intensity measuring device (ultraviolet ray source: LED365D-S) manufactured by Mitsuwa Frontech Corporation, a change in the fluorescence intensity value at all wavelength for the thin film obtained in Example 3 was investigated, and it could be clearly confirmed that the fluorescence intensity varied depending on the temperature.

### [Example 5]

### (Preparation of Aqueous Dispersion Containing Oxygen-Sensitive Fluorescent Dye - 1)

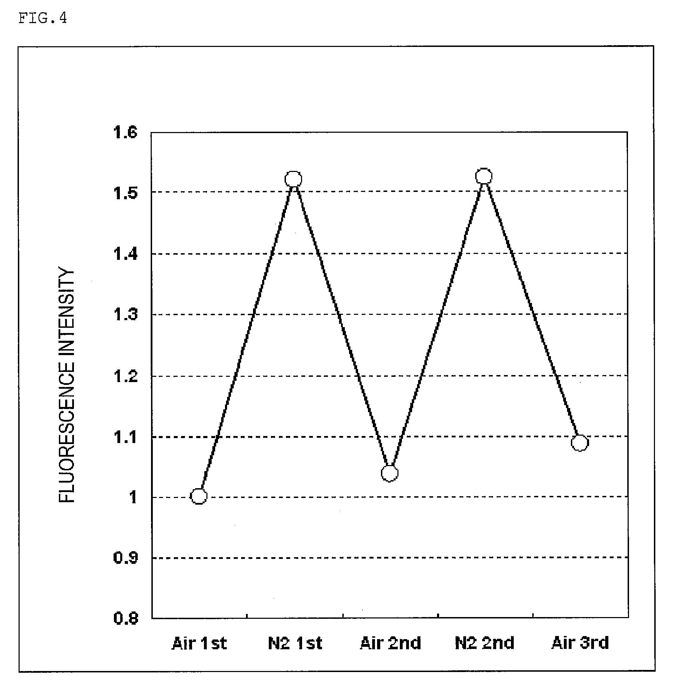

10 parts by weight of the polyolefin-based terminally branched copolymer (T) obtained in the synthesis above, 0.1 parts by weight of tris(2-phenylpyridine)iridium(III) (Ir(III)(ppy)₃) that is an oxygen-sensitive fluorescent dye, and 40 parts by weight of distilled water were charged to a 100 ml autoclave, followed by heating with stirring at a rate of 800 rpm at 135°C for 30 minutes, and then cooling to room temperature while keeping stirring. The obtained dispersion was centrifuged at 7000 rpm for 30 minutes to obtain an aqueous solution of an Ir(ppy)₃-containing polyolefin-based terminally branched copolymer. The average particle diameter of 50% by volume of the obtained dispersion was 0.017 µm (an average particle diameter, of 10% by volume of 0.013 µm and an average particle diameter of 90% by volume of 0.022 µm). The particle diameter measured from the results of the obtained dispersion-based transmission electron microscopy was 0.015 µm -0.030 µm. Further, air and nitrogen were blown alternately and repeatedly into the aqueous dispersion and the fluorescence intensity when excited at 376 nm was measured. As a result, it was confirmed that the fluorescence intensity was reversibly changed (FIG. 4).

### [Comparative Example 5]

### (Preparation of Aqueous Dispersion Containing Oxygen-Sensitive Fluorescent Dye - 2)

0.1 parts by weight of tris(2-phenylpyridine)iridium(III) (Ir (III) (ppy)₃) and 40 parts by weight of distilled water were charged into a 100 ml autoclave, followed by heating with stirring at 135°C at a speed of 800 rpm for 30 minutes, and then cooling to room temperature while keeping stirring. The dispersion state was checked, and as a result, it was found that Ir(ppy)₃ was not dissolved or uniformly dispersed in water, and was suspended or precipitated in the solution.

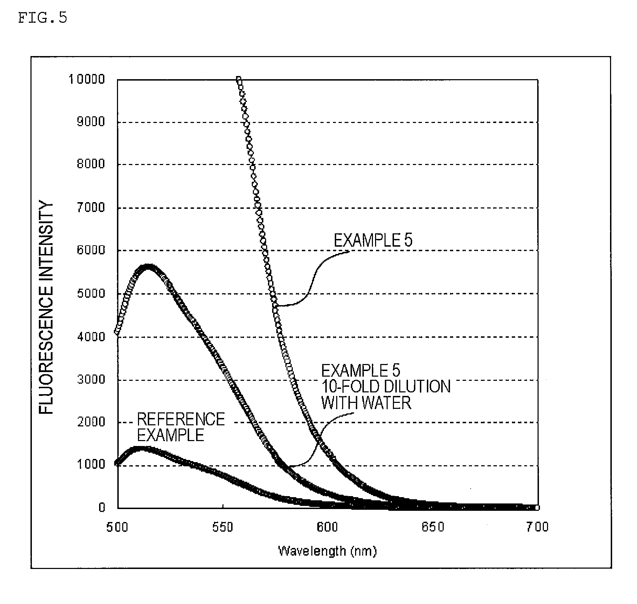

The fluorescence intensity of the aqueous dispersion of Example 5 was measured, and as a result, it was out of the measurement range since the fluorescence intensity at a wavelength of about 500 nm to 570 nmwas too strong. Accordingly, the aqueous dispersion of Example 5 was 10-fold diluted with water and measured by the same method (10-fold dilution in Example 5). As a Reference Example, the fluorescence intensity due to the excitation at 376 nm of a solution having 0.1 parts by weight of Ir (ppy)₃ dissolved in 40 parts by weight of THF was measured. The results are shown in FIG. 5.

The aqueous dispersion containing oxygen-sensitive fluorescent dye-containing copolymer particles of Example 5 exhibited a fluorescence intensity that was 10 or more times higher than the intensity of Reference Example in which Ir(ppy)₃ was dissolved in THF (FIG. 5).

### [Example 6]

### (Preparation of Aqueous Dispersion Containing pH-Sensitive Fluorescent Dye - 1)

10 parts by weight of the polyolefin-based terminally branched copolymer (T) obtained in the synthesis above, 0.1 parts by weight of pyranine that is an ion-sensitive fluorescent dye, and 40 parts by weight of distilled water were charged to a 100 ml autoclave, followed by heating with stirring at a rate of 800 rpm at 135°C for 30 minutes, and then cooling to room temperature while keeping stirring, to obtain an aqueous dispersion of a pyranine-containing polyolefin-based terminally branched copolymer. The average particle diameter of 50% by volume of the obtained dispersion was 0.016 µm (an average particle diameter of 10% by volume of 0.012 µm and an average particle diameter of 90% by volume of 0.022 µm). The particle diameter measured from the results of the obtained dispersion system observed by using a transmission electron microscope was from 0.015 µm to 0.030 µm.

The pH of the aqueous dispersion containing pyranine-containing copolymer particles obtained in Example 6, and the pH of a solution comprising of 0.1 parts by weight of pyranine dissolved in 40 parts by weight of distilled water were adjusted using 0.1 N aqueous hydrochloric acid and 0.1 N aqueous potassium hydroxide to a range from 3.1 to 11.3. First, the fluorescent spectrum was measured by excitation at 365 nm. Both the aqueous dispersion containing pyranine-containing copolymer particles and the aqueous pyranine solution exhibited green fluorescence (fluorescent peak: 510 nm) in a basic region and blue fluorescence (fluorescent peak: 420 nm) in an acidic region.

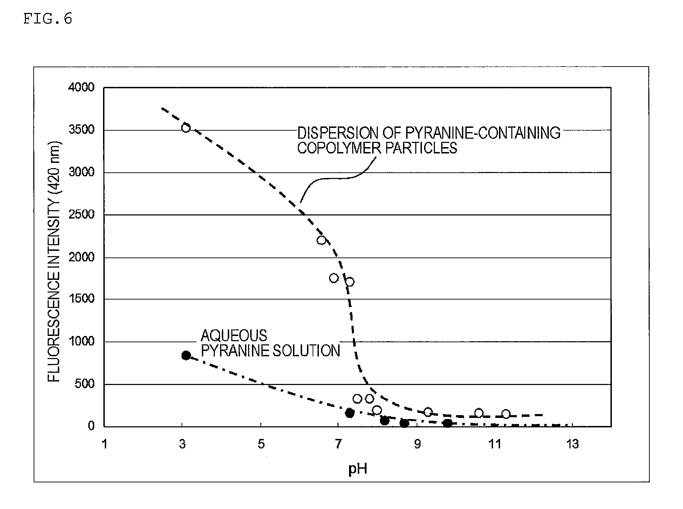

The change in fluorescence intensity at 420 nm depending on a change in pH is shown in FIG. 6. The aqueous dispersion containing pyranine-containing copolymer particles has a rapid change at around pH 7 (neutral), and thus has a clearer responsiveness to pH than the aqueous pyranine solution. In addition, the aqueous dispersion containing pyranine-containing copolymer particles has a high fluorescence intensity (FIG. 6).

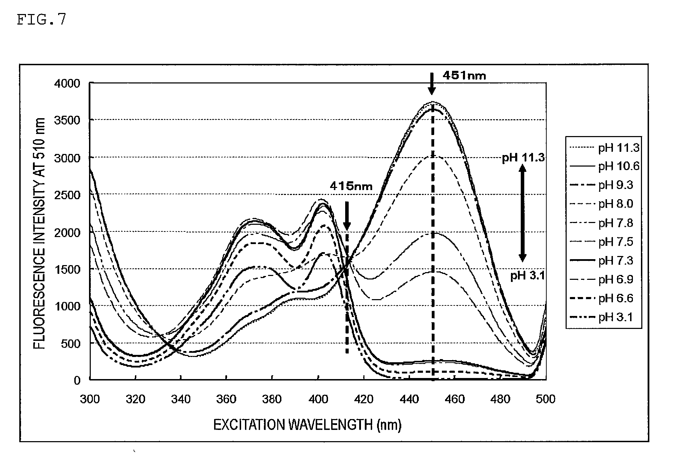

The excitation spectrum at a fluorescence wavelength of 510 nm of the aqueous dispersion containing pyranine-containing copolymer particles at a pH of from 3.1 to 11.3 was measured and the results are shown in FIG. 7. It was found that the fluorescence intensity at 510 nm showed an almost constant value irrespective of the pH in the case of excitation with light at 415 nm, and had a change in the value depending on the value of pH in the case of excitation with light at 451 nm. That is, the amount of change in the fluorescence intensity ratio (451 nm/415 nm) with both of the excited light is proportional to the deprotonation rate of pyranine, and these values are plotted against pH to obtain a calibration curve for determining the acidity/basicity.

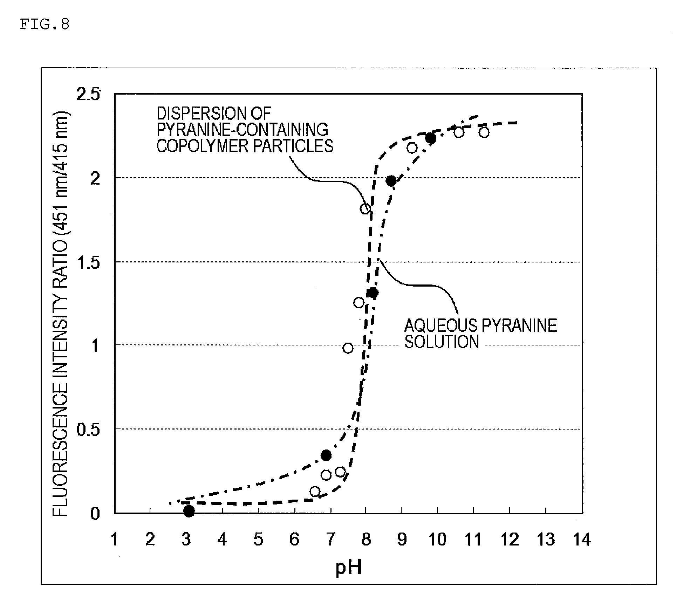

Similarly, for the aqueous pyranine solution, the amounts of change in the fluorescence intensity ratio (excitation wavelength of 451 nm/excitation wavelength of 415 nm) were determined and plotted (FIG. 8). As compared with the aqueous pyranine solution, the aqueous dispersion containing pyranine-containing copolymer particles had a rapid change in the fluorescence intensity ratio at around pH 7, which was thus effective in the case of clearly determining the acidity/basicity.

### [Example 7]

### (Preparation of Aqueous Dispersion Containing Photochromic Dye - 1)

10 parts by weight of the polyolefin-based terminally branched copolymer (T) obtained in the synthesis above, 0.1 parts by weight of a naphthopyran-based photochromic dye, and 40 parts by weight of distilled water were charged to a 100 ml autoclave, followed by heating with stirring at a rate of 800 rpm at 135°C for 30 minutes, and then cooling to room temperature while keeping stirring. The obtained dispersion was centrifuged at 7000 rpm for 30 minutes to obtain an aqueous dispersion of the naphthopyran-based photochromic dye-containing polyolefin-based terminally branched copolymer. The average particle diameter of 50% by volume of the obtained dispersion was 0.017 µm (an average particle diameter of 10% by volume of 0.011 µm and an average particle diameter of 90% by volume of 0.021 µm). The particle diameter measured from the results of the observation of the obtained dispersion system by a transmission electron microscope was from 0.015 µm to 0.030 µm.

### [Comparative Example 6]

### (Preparation of Aqueous Dispersion Containing Photochromic Dye - 2)

0.1 parts by weight of a naphthopyran-based photochromic dye and 40 parts by weight of distilled water were charged to a 100 ml autoclave, followed by heating with stirring at a rate of 800 rpm at 135°C for 30 minutes, and then cooling to room temperature while keeping stirring. The dispersion state was checked, and as a result, it was found that the naphthopyran-based photochromic dye was not dissolved or uniformly dispersed in water, and was suspended or precipitated in the solution.

4.0 parts by weight of the photochromic dye-containing aqueous dispersion obtained in Example 7 and 4 parts by weight of an acryl-based emulsion Almatex A-9083 (solid content concentration: 50% by weight) manufactured by Mitsui Chemicals, Inc. were mixed, then poured into a Petri dish, and air-dried , followed by the evaporation of moisture in a dryer at 60°C to prepare a uniform film (i) (dye concentration: 2850 ppm). As a control, 0.08 parts by weight of the photochromic dye was dissolved in 1 part by weight of acetone and 4 g of Almatex A-9083 was mixed therewith to prepare the uniform film (ii) (dye concentration: 4000 ppm) in a similar manner.

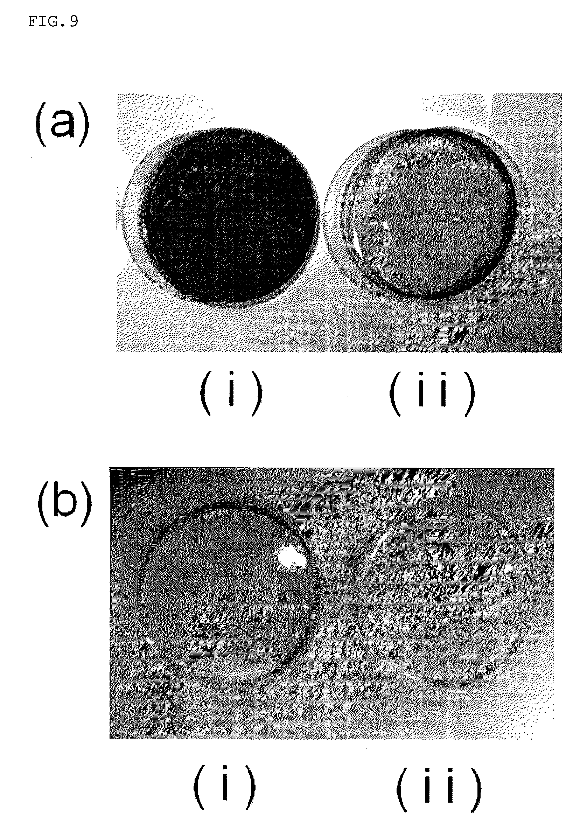

For the evaluation of the photochromic characteristics, the film (i) (total light transmittance 92%) and the film (ii) (a total light transmittance of 93%) were allowed to stand for one minute under direct sunlight and have the films get colored (FIG. 9(a)), and then the films were subject to the rapid measurement of total light transmittances, which showed 20% and 53%, respectively. Further, the films were allowed to stand for 5 minutes indoors and have the films get decolored (FIG. 9(b)), and then measured the total light transmittance, which showed that both films had the same values as those before coloration. The coloration and the decoloration were repeated five times, but substantially the same change in the total light transmittance was observed. It could be seen that the film (i) containing photochromic dye-containing copolymerization particles was excellent in the coloration performance, as compared with the film (ii) directly mixed with the photochromic dye.

### [Example 8]

### (Preparation of Photochromic Dye-Containing Polythiourethane Resin - 1)

10 parts by weight of the polyolefin-based terminally branched copolymer (T) obtained in the synthesis above, 0.1 parts by weight of naphthopyran-based photochromic dye, and 40 parts by weight of distilled water were charged to a 100 ml autoclave, followed by heating with stirring at a rate of 800 rpm at 135°C for 30 minutes, and then cooling to room temperature while keeping stirring. The obtained dispersion was centrifuged at 7000 rpm for 30 minutes to obtain an aqueous dispersion of the naphthopyran-based photochromic dye-containing polyolefin-based terminally branched copolymer. The dispersion was freeze-dried to collect powder and the moisture was removed completely in a dryer under reduced pressure. Immediately thereafter, the residue was redispersed in 40 parts by weight of chloroform. A dispersion of this naphthopyran-based photochromic dye-containing polyolefin-based terminally branched copolymer in chloroform was sufficiently mixed with 6.4 parts by weight of 1,2-bis(2-mercaptoethyl)thio-3-mercaptopropane represented by the formula (14) and 6.0 parts by weight of pentaerythrythol tetra(3-mercaptopropionate) represented by the formula (15), and then chloroform was completely removed therefrom using an evaporator. Furthermore, 12.6 parts by weight of norbornene diisocyanate represented by the formula (16), 0.02 parts by weight of dibutyl tin dichloride, and 0.125 parts by weight of Zelec UN (STEPAN Co.) as an internal release agent were added thereto, followed by stirring and degassing for 1 hour under reduced pressure. The resultant was filtered through a 1-µm Teflon (registered trademark) filter and then injected to a molding mold including a glass mold and a gasket. Polymerization was carried out for 30 hours by raising the temperature of the molding from 20°C to 130°C to synthesize a resin. After completion of the polymerization, the resin synthesized was cooled slowly and was taken out from the molding mold. The obtained resin was subjected to an annealing treatment at 130°C for 2 hours to obtain a lens having a center thickness of 1.15 mm.

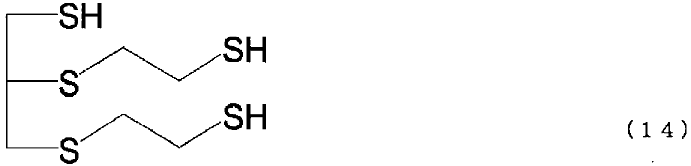

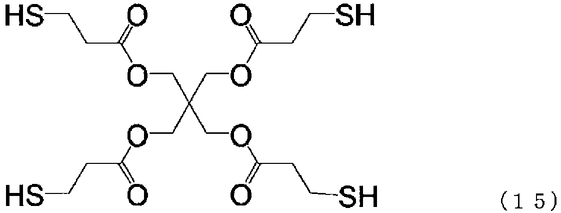

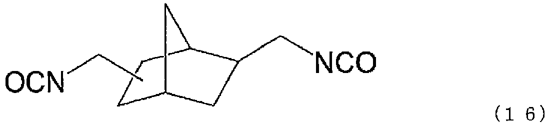

The obtained resin (total light transmittance of 95%) was colored by leaving it to stand under direct sunlight for one minute, and the total light transmittance of the resin measured immediately was 18%. Further, the resin was decolored by leaving it in room for 5 minutes, and the total light transmittance was measured and found to be the same value as before coloration. The coloration/decoloration was repeated five times, but substantially the same change in the total light transmittance was observed.

### [Comparative Example 7]

### (Preparation of Photochromic Dye-Containing Polythiourethane Resin - 2)

0.1 parts by weight of a naphthopyran-based photochromic dye, 6.4 parts by weight of 1,2-bis(2-mercaptoethyl)thio-3-mercaptopropane, 40 parts by weight of chloroform, and 6.0 parts by weight of pentaerythrythol tetra(3-mercaptopropionate) were sufficiently mixed and chloroform was completely removed therefrom using an evaporator. Further, 12.6 parts by weight of norbornene diisocyanate, 0.02 parts by weight of dibutyl tin dichloride, and 0.125 parts by weight of Zelec UN (STEPAN Co.) as an inner release agent were added thereto, followed by stirring and degassing for 1 hour under reduced pressure. The resultant was filtered through a 1-µm Teflon (registered trademark) filter and then injected to a molding mold including a glass mold and a gasket. This molding mold was polymerized for 30 hours by raising the temperature from 20°C to 130°C to synthesize a resin. After completion of the polymerization, the resin thus synthesized, which had been slowly cooled, was taken out of the molding mold. The obtained resin was subjected to an annealing treatment at 130°C for 2 hours to obtain a lens having a center thickness of 1.15 mm.

The obtained resin (total light transmittance of 94%) was colored by leaving it to stand under direct sunlight for one minute, and the total light transmittance of the resin measured immediately was 42%. Further, the resin was left indoors for 5 minutes and thus decolored, and then the total light transmittance was measured, but the resin was not decolored to the initial state and showed the total light transmittance being 73%.

Thus, by using the terminally branched copolymer particles, the fluorescent dye is present stable in an aqueous environment, the fluorescence quenching action is inhibited, and in addition, suppression of the responsiveness of the chromic dye can be inhibited.

This application claims priority based on Japanese Patent Application No. 2012-152704, which was filed on July 6, 2012, the disclosure of which is incorporated herein in its entirety.

## Claims

1. Polymer particles comprising the following components (a) and (b) and having an average particle diameter of 50% by volume of equal to or more than 1 nm and equal to or less than 1000 nm:
(a) an amphiphilic polymer; and
(b) a compound exhibiting a change in fluorescence characteristics or light absorption characteristics in response to a change in a specific environmental factor.

2. Polymer particles comprising the following components (a) and (b) and having an average particle diameter of 50% by volume of equal to or more than 1 nm and equal to or less than 1000 nm:
(a) an amphiphilic polymer; and
(b) a compound exhibiting a change in fluorescence characteristics in response to a change in a specific environmental factor.

3. The polymer particles according to claim 1 or 2, wherein
the (a) is a polymer particle represented by the following general formula (1) and is a terminally branched copolymer having a number average molecular weight of equal to or less than 2.5 × 10⁴, 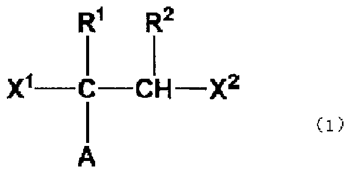 wherein, in the formula (1), A represents a polyolefin chain;
R¹ and R² each represent a hydrogen atom or an alkyl group having 1 to 18 carbon atoms, and at least one of R¹ and R² is a hydrogen atom; and X¹ and X² are the same as or different from each other and each represent a group containing a linear or branched polyalkylene glycol group.

4. The polymer particles according to claim 3, wherein
in the terminally branched copolymer represented by the general formula (1), X¹ and X² are the same as or different from each other, and are each a group represented by either of the general formulae (2) and (4),
-E-X³ (2)
wherein, in the formula (2), E represents an oxygen atom or a sulfur atom; and X³ represents a polyalkylene glycol group or a group represented by the general formula (3),
-R³-(G)ₘ (3)
wherein, in the formula (3), R³ represents an (m+1)-valent hydrocarbon group; Gs are the same as or different from each other and each represent a group represented by -OX⁴ or -NX⁵X⁶ (X⁴ to X⁶ each represent a polyalkylene glycol group); and m is the bonding number for R³ to group G, and represents an integer of 1 to 10, 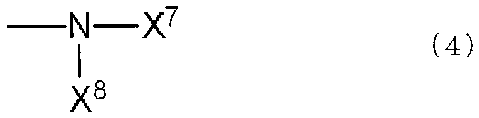 wherein, in the formula (4), X⁷ and X⁸ are the same as or different from each other and each represent a polyalkylene glycol group or a group represented by the general formula (3).

5. The polymer particles according to claim 4, wherein
the terminally branched copolymer is represented by the following general formula (1a) or (1b), 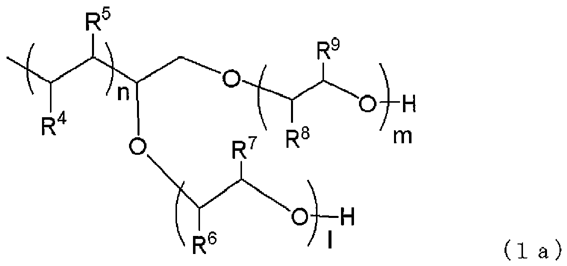 wherein, in the formula (1a), R⁴ and R⁵ each represent a hydrogen atom or an alkyl group having 1 to 18 carbon atoms, and at least one of R⁴ and R⁵ is a hydrogen atom; R⁶ and R⁷ each represent a hydrogen atom or a methyl group, and at least one of R⁶ and R⁷ is a hydrogen atom; R⁸ and R⁹ each represent a hydrogen atom or a methyl group, and at least one of R⁸ and R⁹ is a hydrogen atom; 1 + m represents an integer of equal to or more than 2 and equal to or less than 450; and n represents an integer of equal to or more than 20 and equal to or less than 300, 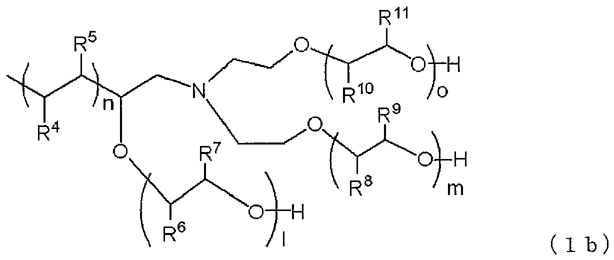 wherein, in the formula (1b), R⁴ and R⁵ each represent a hydrogen atom or an alkyl group having 1 to 18 carbon atoms, and at least one of R⁴ and R⁵ is a hydrogen atom; R⁶ and R⁷ each represent a hydrogen atom or a methyl group, and at least one of R⁶ and R⁷ is a hydrogen atom; R⁸ and R⁹ each represent a hydrogen atom or a methyl group, and at least one of R⁸ and R⁹ is a hydrogen atom; R¹⁰ and R¹¹ each represent a hydrogen atom or a methyl group, and at least one of R¹⁰ and R¹¹ is hydrogen atom; 1 + m + o represents an integer of equal to or more than 3 and equal to or less than 450; and n represents an integer of equal to or more than 20 and equal to or less than 300.

6. The polymer particles according to any one of claims 1 to 5, wherein
the average particle diameter of 50% by volume is equal to or more than 1 nm and equal to or less than 30 nm.

7. The polymer particles according to any one of claims 1 to 6, wherein
the (b) is a temperature-sensitive fluorescent dye.

8. The polymer particles according to claim 7, further comprising
a non-temperature-sensitive fluorescent dye as a reference for the temperature-sensitive fluorescent dye.

9. The polymer particles according to claim 7 or 8, wherein
the temperature-sensitive fluorescent dye is selected from a complex compound of a rare earth element selected from europium (Eu), lanthanum (La), samarium (Sm), gadolinium (Gd), terbium (Tb), dysprosium (Dy), thulium (Tm), ytterbium (Yb), and lutetium (Lu) with β-diketone chelating compounds, or a complex compound of iridium (Ir) with aromatic compounds.

10. The polymer particles according to claim 9, wherein
the temperature-sensitive fluorescent dye is tris(thenoyltrifluoroacetonate)europium (III) (Eu (III)(TTA)₃) or a derivative thereof.

11. The polymer particles according to any one of claims 1 to 8, wherein
the (b) is fluorescent protein.

12. The polymer particles according to any one of claims 1 to 6, wherein the (b) is an oxygen-sensitive fluorescent dye or a pH-sensitive fluorescent dye.

13. The polymer particles according to claim 12, wherein the oxygen-sensitive fluorescent dye is tris(2-phenylpyridine)iridium(III) (Ir(III)(ppy)₃) or a derivative thereof, and the pH-sensitive fluorescent dye is pyranine.

14. The polymer particles according to any one of claims 1 to 6, wherein the (b) is a chromic material.

15. The polymer particles according to claim 14, wherein the chromic material is a photochromic dye.

16. The polymer particles according to claim 15, wherein the photochromic dye is a naphthopyran derivative.

17. An aqueous dispersion having the polymer particles according to any one of claims 1 to 16 dispersed in water and/or a solvent which dissolves a part of water or dissolves all of water in an arbitrary ratio.

18. A mixed composition comprising the following (A), (B), and (C), and if necessary, (D):
(A) the polymer particles according to any one of claims 1 to 16;
(B) a metal alkoxide and/or a partial hydrolysis condensate thereof;
(C) water and/or a solvent which dissolves a part of water or dissolves all of water in an arbitrary ratio; and
(D) a catalyst for a sol-gel reaction.

19. An organic/inorganic composite comprising the polymer particles according to any one of claims 1 to 16 and a metal oxide.

20. A sensor comprising any of the polymer particles according to any one of claims 1 to 16, the aqueous dispersion according to claim 17, the mixed composition according to claim 18, and the organic/inorganic composite according to claim 19.

21. A temperature detecting component comprising the polymer particles according to any one of claims 7 to 10.

22. An oxygen detecting component or ion concentration detecting component comprising the polymer particles according to claim 12 or 13.

23. A chromic article comprising the polymer particles according to any one of claims 14 to 16.

24. The chromic article according to claim 19, which is a photochromic optical article.
